# EUROPEAN PATENT APPLICATION

(11) **EP 0 919 363 A1**
(43) Date of publication of application: **02.06.1999**
(21) Application number: 98924620.2
(22) Date of filing: 15.06.1998
(51) Int. Cl.: B32B 15/08, B29C 65/02, C08J 5/12

(54) **BONDED COMPOSITE AND SEALING COMPOSITION FOR USE IN THE SAME**

(30) Priority: 13.06.1997 JP 173251/97
(71) Applicant: Nippon Petrochemicals Company, Limited, Tokyo 100-8530 (JP)
(72) Inventor: INOUE, Toshio, Kawasaki-shi, Kanagawa 213-0001 (JP); YONETA, Hiroyoshi, Kanagawa 235-0016 (JP); HASHIMOTO, Akio, Kanagawa 233-0007 (JP)
(74) Representative: Strehl Schübel-Hopf & Partner
(86) International application number: JP9802623
(87) International publication number: WO9856578

(57) **Abstract**

A bonded composite having excellent adhesiveness can be obtained by melt bonding a metallic material, preferably one having a surface treated with a triazinethiol compound, to a thermoplastic resin, preferably a thermotropic liquid-crystal resin, while incorporating at least one resin selected from the group consisting of oxygen-containing hydrocarbon resins, thermoplastic elastomers each containing structural units derived from an α,β-unsaturated carboxylic acid or its anhydride, polyamide resins, and non-liquid-crystal polyester resins as an agent for enhancing the effect of adhesion into the thermoplastic resin.

When the thermotropic liquid-crystal resin has at least one constituent monomer selected from the group consisting of aromatic hydroxylamines, aromatic diamines, and aromatic aminocarboxylic acids, a high effect of adhesion to the metallic material can be obtained likewise.

A composition comprising the thermotropic liquid- crystal resin, and a terpene resin or a thermoplastic polyester elastomer reduces the minimum charging pressure and eliminates problems concerning weld strength, appearance and others, thus being useful as an embedding material.

## Description

### TECHNICAL FIELD

The present invention relates to a bonded composite formed by bonding a metallic material and a thermoplastic resin, especially thermoplastic liquid crystal, and to resin compositions for embedding which are improved in various properties for use in the bonded composite.

In other words, the present invention relates to a bonded composite consisting of a metallic material and a thermoplastic resin represented by thermotropic liquid crystal. More particularly, it relates to a bonded composite having a high sealing property, which is enhanced in adhesive strength by bringing a metallic material, preferably one having a surface treated with a triazinethiol compound, into contact with a thermoplastic resin composition in a molten state, wherein the above resin composition contains an oxygen-containing hydrocarbon resin and the like which cause interactions such as hydrogen bond and chemical bond with the metal surface or the above triazinethiol compound.

Bonded composites thus obtained are used as constituent members of various industrial parts, especially electrical, electronic and optical parts. For instance, the method can be adopted, which comprises placing metallic material as members to be bonded or embedded in a cavity of mold and injecting a molten thermoplastic resin into the left vacant space. As one of the most typical resin-embedded parts (parts that is embedded in a resin body) in electrical or electronic devices, there is a lead frame embedding parts, which is formed by using lead frames made of metal as members to be embedded and using heat-resistant engineering plastics represented by thermotropic liquid-crystal resin (hereinafter also called as " liquid-crystal resin" or simply "LCP"), polyphenylene sulfide (PPS), aromatic nylon and the like as embedding or encapsulating materials.

Furthermore, the present invention relates to a thermotropic liquid-crystal resin composition which can be used for injection molding under low pressure, and thermotropic liquid-crystal resin compositions suitable for the above embedment, which are free from troubles such as low weld strength, surface peeling by fibrillation and warp owing to anisotropic shrinkage.

### BACKGROUND ART

A composite consisting of a resin material and metallic material is a member used in various industrial fields, especially in electrical and electronic industries. With the recent increase in the demands for a composite having improved functions ad high compactness, methods for preparing composites consisting of a resin materials and metallic material have been investigated, which methods use thermoplastic resins as resin materials that can freely be used for product designing, and which methods use, as molding means, various types such as ultrasonic fusion bonding, dielectric fusion bonding, insert molding and out-sert molding.

In the resin-embedded parts including lead frame used in the electrical and electronic fields, especially in semiconductor apparatus, thermosetting resin has been hitherto used as main material. However, as demands are proposed additionally for simplifying the manufacturing process and for recycling materials, embedded parts which are produced by using as materials thermoplastic resins in place of thermosetting resins and using insert molding or out-sert molding are requested strongly as composites having great reliability

When thermotropic liquid-crystal resin among the rest is used as an embedding resin material, a heat-resistant composite also stable in various heating steps such as soldering after embedding can be obtained. Therefore, the demand for a bonded composite consisting of LCP and a metallic material is especially large.

Electrical and electronic parts are connected with wires such as leading wire. When these parts are embedded in a resin, a part of leading wire must also be embedded.

However, the adhesion of metal materials and thermoplastic resin such as liquid-crystal resin is so difficult that highly reliable bonded composite has not been obtained.

For instance, as an art relating to a bonded composite consisting of resin materials and metallic materials, injection bonding of copper material having a surface treated with a triazinethiol compounds and polyethylene is proposed in Japanese Patent Publication No. 1-60051. However, the above art is restricted to the case that the metal as a partner material is copper material, and besides, the so-called improved level in weld strength is not necessarily sufficient.

The method described in Japanese Patent Publication No. 60-41084 disclosing a bonded material consisting of rubber and metal, and the one in Japanese Patent Publication No. 8-856 disclosing a composite consisting of plastics and metal are in the same way as above.

Thus, prior inventions were inadequate for application to a bonded composite consisting of various resins having high reliability and metals, particularly for application to a bonded composite of metal / thermotropic liquid-crystal resin.

Then, the object of the present invention is to make possible extensive applications to bonded composite consisting of thermoplastic resin and metal, especially bonded composite of metal/thermotropic liquid-crystal resin, and to provide bonded composite having high reliability

Further, LCP shows intensive orientation under shear stress, and it solidifies rapidly because its latent heat is small. These characteristics are expressed as defects such as low weld strength, peeling surface by fibrillation and warp owing to anisotropic shrinkage, so that the freedom of product design is sometimes restricted.

Furthermore, when injection molding is carried out with molten LCP in the production of embedded parts, the pressure required for injection into a mold (hereinafter called as "charging pressure" or "filling pressure") is often so high that elements suffer deformation, damage or disconnection to cause defects of product. In order to avoid these troubles, charging pressure of LCP must be low. High charging pressure is also harmful in producing thin moldings. Accordingly, low charging pressure gives a preferable effect also in producing thin moldings.

Because most of the above defects of LCP are due to anisotropy of LCP, various methods have been investigated for relaxation of anisotropy.

For instance, anisotropy is relaxed by filling glass fiber or inorganic filler However, with this method, any effect cannot be obtained when several tens percent of a filler is not used. As a result, low apparent viscosity inherent in LCP is not maintained in injection molding so that workability is impaired. Further, in extrusion molding, for example in the case of producing film or fiber, which amounts to most of all extrusion products, it is practically difficult to compound fillers such as glass fiber. Therefore, unsatisfactory performances in practice are often obtained.

As the other method, blending various polymers with LCP is investigated. However, mainly owing to compatibility and lowering of workability due to compatibility accelerator added for the improvement of compatibility, satisfactory results have not always been obtained.

Accordingly, another object of the present invention is to provide resin compositions, which are free from the troubles inherent in LCP, such as low weld strength, surface peeling by fibrillation and warp owing to anisotropic shrinkage, and further to provide resin compositions which can be used with low charging pressures and suitable as embedding materials used with elements in the fields of electricity, electronics and optics.

### DISCLOSURE OF INVENTION

The contents of the present invention mainly consist of three items as follows.

A first feature of the present invention relates to a bonded composite, which is formed by bonding (laminating) a metallic material, preferably one having a surface treated with a triazinethiol compound, and a thermoplastic resin, preferably LCP. Various agents for enhancing the effect of adhesion are added to the above thermoplastic resins.

A second feature of the present invention relates to a bonded composite, wherein the above LCP contains at least one constituent monomer selected from the group consisting of aromatic hydroxylamines, aromatic diamines and aromatic aminocarboxylic acids.

A third feature of the present invention relates to LCP compositions which is used for the above bonded composite and suitable as embedding resin.

The present invention will be described in more detail in the following.

A first feature of the present invention, as above-mentioned, relates to a bonded composite formed by bonding a metallic material, preferably one having a surface treated with a triazinethiol compound, and thermoplastic resins which contain various resins as agents for enhancing the effect of adhesion, preferably resin compositions consisting of LCP. Exemplified as agents for enhancing the effect of adhesion are hydrocarbon resin, thermoplastic elastomer each containing structural units derived from α,β-unsaturated carboxylic acid or its anhydride, polyamide resin, and non-liquid-crystal polyester resin.

The above invention utilizes interactions between a metal and thermoplastic resin compositions containing agents for enhancing the effect of adhesion, or interactions between a triazinethiol compound added to the surface of the metal and the resin compositions, in order to increase the adhesiveness between metal and resin.

Metallic material is not restricted, for example, there are copper, copper alloy, cold pressed steel plate, cast iron, iron-nickel alloy such as stainless steel, and aluminum and its alloy, and so forth. As for shape of metallic material, any shape such as plate or wire can be used. Further, metal can be pretreated appropriately by means of filing or forming oxidized film.

Exemplified as a definite form of metallic material is a lead frame used for production of semiconductor. Circuit conductors connected to, and lead wires as conductor from electric source are usually also examples of definite forms. These must be usually embedded simultaneously when electrical and electronic parts are embedded. Therefore, the metal materials used for these, such as copper, aluminum, gold, silver, tin, nickel and alloys containing these metals, are exemplified as metals used in the present invention. As for the shape, any can be used including line, plane having openings and the like.

Metallic material does not need to be pretreated at all. They may be sent to bonding step after only being washed appropriately with a solvent in usual way. However, it is possible to further increase adhesiveness by treating the surface of metallic material previously with a triazinethiol compounds.

The above triazinethiol compounds are compounds of triazine skeleton having as substituents one to three thiol groups or their derivatives, and usually water-soluble. More definitely, the structure shown in the following formula [I] is preferable.

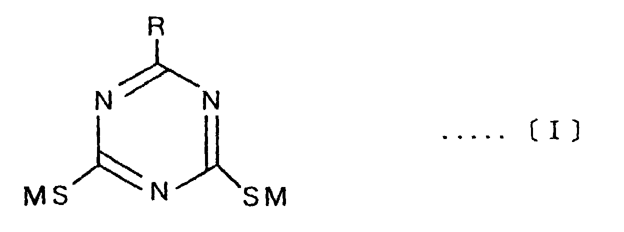

In the formula [I], substituent R is -OR', -SR', -NHR' or -N(R')₂. The group R' in the substituent R is a hydrogen atom, alkyl group, alkenyl group, phenyl group, alkylphenyl group or cycloalkyl group. The number of carbon atoms in R is preferably not more than 36. The compounds having carbon atoms more than 36 are undesirably water-insoluble. M is H, Na, Li, K, Rb, Cs, 1/2Ba or 1/2Ca, or aliphatic primary, secondary or tertiary amine, or quarternary ammonium salt, or the like. Two M's can be the same or different ones.

Exemplified as R's are -SH, -NHC₆H₅, -NHC₈H₁₇, -NHC₁₂H₂₅, -NHC₁₈H₃₅, -NHC₁₈H₃₇, -N(C₄H₉)₂, -N(C₈H₁₇)₂, -N(C₁₂H₂₅)₂ and others.

The surface treatment of metallic material with a triazinethiol compound is can be carried out by bringing metallic material into contact with a solution or dispersion liquid of a compound of triazinethiol compound. These treatments can be practiced according to the method described in, for example, Japanese Patent Publication No. 1-60051 and Japanese Patent Publication No. 8-856.

Definite solution or dispersion liquid of triazinethiol compounds can be obtained by dissolving or dispersing compounds of triazinethiol into water; water-soluble solvent such as triethylene glycol; organic solvents comprising alcohol such as methyl alcohol and isopropyl alcohol, ketone such as acetone, methyl ethyl ketone and tetrahydrofuran, lower aromatic hydrocarbon such as benzene, toluene and xylene, ester such as ethyl cellosolve, dimethyl formaldehyde and ethyl acetate, and ether such as dimethyl ether; non-aqueous solvent which is water-insoluble or hardly soluble, such as decalin, benzyl alcohol and benzyl acetate; or mixed solvents of these in appropriate ratio.

In preparing a solution, solvent is suitably heated and 0.0001-30% by weight of a triazinethiol compound is dissolved or dispersed.

Surface treatment can be carried out, for example, by soaking a metallic material in the above solution or dispersion liquid. Moreover, it is also possible to use application. As the time required for surface treatment, 0.1 or more second is sufficient. Accordingly, after removing fat, pickling, alkali cleaning and rinsing are appropriately carried out, dried metallic materials are soaked in the above solution or dispersion liquid for a fixed time, or the above solution or dispersion liquid is applied to the metallic materials. After that, the metallic materials are washed with organic solvent such as alcohol or acetone, rinsed with water and dried. In the treating, appropriate heating can be carried out within a temperature range below the boiling point of solvent. Practically, temperature range is from the normal temperature to 300°C.

Further, the surface treatment can be also carried out electrochemically for example, according to the method described in Japanese Patent Publication No. 5-51671. Concretely, it is possible to carry it out by using aqueous solution or organic solvent solution of triazine thiol as electrodeposition liquid, using a metal of metallic material as anode, and appropriate conductor such as platinum plate or titanium plate as cathode, and applying direct current in voltage of 20 V or less and current density of 0.1 mA/dm² for 0.1 second or more.

Then, in the first feature of the present invention, exemplified as thermoplastic resins to be bonded to metallic material are polyolefins such as polyethylene and polypropylene; copolymers of olefin with polar monomer such as vinyl acetate, such as EVA and EEA; polyvinylchloride; polystyrene; polyesters such as PET. Preferably, heat-resistant engineering plastics represented by thermotropic liquid-crystal resin (LCP), polyphenylene-sulfide (PPS), polyetheretherketone (PEEK), polycarbonate (PC), polybutyleneterephthalate (PBT) and polyamide (PA66) are used. More preferably LCP represented by wholly-aromatic polyester is used.

When used as embedding materials, the above heat-resistant engineering plastics are preferable because it is soldering resistant. Among the rest, LCP is desirable because it is low in melt viscosity under stress as well as heat-resistant.

Thermotropic liquid-crystal resins used in the present invention are polymers having optical anisotropy in a molten state. These polymers have a character that molecule chains of polymer arrange regularly parallel in a molten state. Optical anisotropy given by molten phase can be confirmed with a usual inspection method on polarized light utilizing a right angle polarizer. General polymers are isotropic in a molten state. When anisotropy is given in a molten state, solid phase transforms through anisotropic liquid-crystal phase into isotropic phase in a temperature range.

In thermotropic liquid-crystal resins, mechanical anisotropy can also be confined. More precisely, it is noticed that peeling and fibrillation of the surface of products are remarkable in injection molding, and the differences between properties in the direction of resin flow and those in the perpendicular direction are great.

Thermotropic liquid-crystal resins are produced from monomers which are long and narrow, flat and high in stiffness along the long chain of molecule, and have plural bonds capable of extending chains with the same or parallel axes.

Exemplified as the above thermotropic liquid-crystal resins are liquid-crystal polyester and liquid-crystal polyesterimide, and more definitely, (wholly) aromatic polyester, polyesteramide and polyester carbonate. Preferable resin is liquid-crystal polyester, which is placed under the category of polyester as long as it contains several ester configurations in a molecule. In polyesters, aromatic polyester is preferable.

Thermotropic liquid-crystal resins used in the above invention include also polymers in which a part of a high polymer chain consists of a segment forming anisotropic molten phase and the rest part consists of a segment forming no anisotropic molten phase. Moreover, resin composites of plural thermotropic liquid-crystal resins are included.

Exemplified as typical monomers forming thermotropic liquid-crystal resins are as follows.
(a) At least one kind of aromatic dicarboxylic acids,
(b) At least one kind of aromatic hydroxycarboxylic acid compounds,
(c) At least one kind of aromatic diol compounds,
(d) At least one kind of (d₁) aromatic diols, (d₂) aromatic thiophenols and (d₃) aromatic thiolcarboxylic acids,
(e) At least one kind of aromatic hydroxylamines or aromatic diamines.

These are utilized sometimes separately, but in many cases they are used in combinations such as (a) and (c); (a) and (d); (a), (b) and (c); (a), (b) and (e); or (a), (b), (c) and (e).

Exemplified as the above (a) compounds of aromatic dicarboxylic acid are aromatic dicarboxylic acids such as terephthalic acid, 4,4'-biphenyldicarboxylic acid, 4,4'-triphenyldicarboxylic acid, 2,6-naphthalenedicarboxylic acid, 1,4-naphthalenedicarboxylic acid, 2,7-naphthalenedicarboxylic acid, diphenylether-4,4'-dicarboxylic acid, diphenoxyethane-4,4'-dicarboxylic acid, diphenoxybutane-4,4'-dicarboxylic acid, diphenylethane-4,4'-dicarboxylic acid, isophthalic acid, diphenyl ether-3,3'-dicarboxylic acid, diphenoxyethane-3,3'-dicarboxylic acid, diphenylethane-3,3'-dicarboxylic acid, 1,6-naphthlenedicarboxylic acid, or substitution products with alkyl, alkoxy or halogen, of the above aromatic dicarboxylic acids represented by chloroterephthalic acid, dichloroterephthalic acid, bromoterephthalic acid, methylterephthalic acid, dimethylterephthalic acid, ethylterephthalic acid, methoxyterephthalic acid and ethoxyterephthalic acid.

Exemplified as (b) compounds of aromatic hydroxycarboxylic acid are aromatic hydroxycarboxylic acids such as 4-hydroxybenzoic acid, 3-hydroxybenzoic acid, 6-hydroxy-2-naphthoic acid and 6-hydroxy-1-naphthoic acid, or substitution products with alkyl, alkoxy or halogen, of aromatic hydroxycarboxylic acids such as 3-methyl-4-hydroxybenzoic acid, 3,5-dimethyl-4-hydroxybenzoic acid, 2,6-dimethyl-4-hydroxybenzoic acid, 3-methoxy-4-hydroxybenzoic acid, 3,5-dimethoxy-4-hydroxybenzoic acid, 6-hydroxy-5-methyl-2-naphthoic acid, 6-hydroxy-5-methoxy-2-naphthoic acid, 2-chloro-4-hydroxybenzoic acid, 3-chloro-4-hydroxybenzoic acid, 2,3-dichloro-4-hydroxybenzoic acid, 3,5-dichloro-4-hydroxybenzoic acid, 2,5-dichloro-4-hydroxybenzoic acid, 3- bromo-4-hydroxybenzoic acid, 6-hydroxy-5-chloro-2-naphthoic acid, 6-hydroxy-7-chloro-2-naphthoic acid and 6-hydroxy-5,7-dichloro-2-naphthoic acid.

Exemplified as (c) compounds of aromatic diol are aromatic diols such as 4,4'-dihydroxybiphenyl, 3,3'-dihydroxybiphenyl, 4,4'-dihydroxyterphenyl, hydroquinone, resorcin, 2,6-naphthalenediol, 4,4'-dihydroxydiphenyl ether, bis(4-hydroxyphenoxy)ethane, 3,3'-dihydroxydiphenyl ether, 1,6-naphthalenediol, 2,2-bis(4-hydroxyphenyl)propane and bis(4-hydroxyphenoxy)methane, or substitution products with alkyl, alkoxy or halogen, of aromatic diols such as chlorohydroquinone, methylhydroquinone, tert-butylhydroquinone, phenylhydroquinone, methoxyhydroquinone, phenoxyhydroquinone, 4-chlororesorcin and 4-methylresorcin.

Exemplified as (d₁) aromatic dithiols are benzene-1,4-dithiol, benzene-1,3-dithiol, 2,6-naphthalenedithiol, 2,7-naphthalenedithiol and the like.

Exemplified as (d₂) aromatic thiophenols are 4- mercaptophenol, 3-mercaptophenol, 6-mercaptophenol and the like.

Exemplified as (d₃) aromatic thiolcarboxylic acids are 4-mercaptobenzoic acid, 3-mercaptobenzoic acid, 6-mercapto-2-naphthoic acid, 7-mercapto-2-naphthoic acid and the like.

Exemplified as (e) compounds of aromatic hydroxylamine and aromatic diamine are 4-aminophenol, N-methyl-4-aminophenol, 1,4-phenylenediamine, N-methyl-1,4-phenylenedimine, N,N'-dimethyl-1,4-phenylenediamine, 3-aminophenol, 3-methyl-4-aminophenol, 2-chloro-4-aminophenol, 4-amino-1-naphthol, 4-amino-4'-hydroxybiphenyl, 4-amino-4'-hydroxydiphenyl ether, 4-amino-4'-hydroxydiphenylmethane, 4-amino-4'-hydroxydiphenyl sulfide, 4,4'-diaminodiphenyl sulfide (thiodianiline), 4,4'-diaminodiphenyl sulfone, 2,5-diaminotoluene, 4,4'-ethylenedianiline, 4,4'-diaminodiphenoxyethane, 4,4'-diaminodiphenylmethane (methylenedianiline), 4,4'-diaminodiphenyl ether (oxydianiline) and the like.

Thermotropic liquid-crystal polyesters used in the above invention can be produced from the above monomers by using various methods for producing ester such as fusion acidolysis and slurry polymerization.

The molecular weight of thermotropic liquid-crystal polyester used in the above invention is about 2,000-200,000, preferably about 10,000-100,000. The values of molecular weight are determined, for example, by analyzing end groups on compressed films by infrared spectrophotometry. Further, GPC, a general method of measuring in a state of solution, can be also used.

In thermotropic liquid-crystal resins obtained from these monomers, a polymer or copolymer of aromatic polyester which contains, as indispensable component, the monomer unit shown by the following formula [II] is preferable. It contains, preferably, about 5 mol % or more of the above monomer unit.

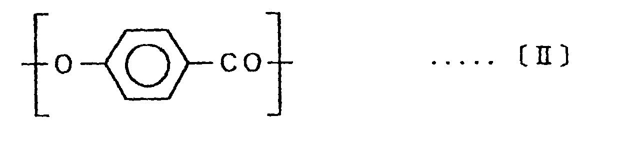

The aromatic polyester especially suitable for the present invention is the one having the repeating units derived from three compounds of p-hydroxybenzoic acid, phthalic acid and dihydroxybiphenyl respectively, which is shown in the following formula [III]. In the polyester, a repeating unit derived from dihydroxybenzene can be substituted for a part or the whole of a repeating unit derived from dihydroxybiphenyl.

Moreover, polyesters having the repeating units derived from two compounds of p-hydrobenzoic acid and hydroxynaphthalenecarboxylic acid respectively are also preferably utilized, which are shown in the following formulae [IV].

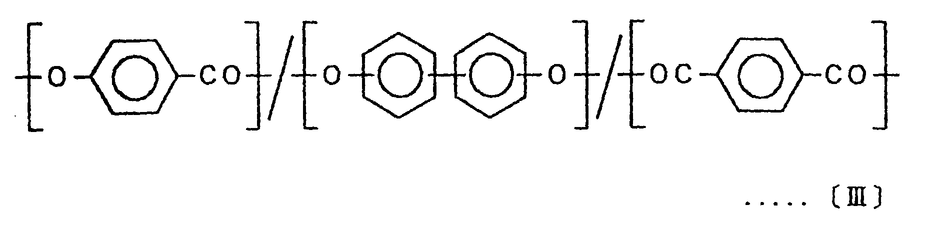

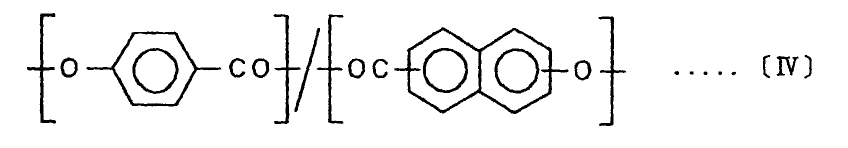

Thermotropic liquid-crystal polyesters in the present invention can be used separately, and also as a mixture of two kinds or more.

Agents for enhancing the effect of adhesion in the first feature of the present invention, mixed into thermoplastic resin, preferably LCP, will be described successively.

Exemplified as "oxygen-containing hydrocarbon resins" are, at first, hydrocarbon resins containing oxygen atoms which are obtained by copolymerizing olefins with oxygen-containing compounds such as carboxylic acid, phenol and alcohol, or by modifying the hydrocarbon obtained by polymerizing olefins with the above oxygen-containing compounds. Oxygen atom is preferably contained in 0.1-3 in a molecule on the average. Concretely, oxygen-containing terpene hydrocarbon resins derived from unsaturated terpene monomers such as α-pinene, β-pinene, dipentene, d-limonene and l-limonene are exemplified. Further, hydrocarbon resins containing free carboxylic acid or hydroxyl group are preferable. Free carboxylic acid or hydroxyl group is preferably contained in 0.1-3 in a molecule of hydrocarbon on the average. More definitely, exemplified as oxygen-containing terpene hydrocarbon resins are reaction products of terpene monomer with phenols such as phenol, cresol, hydroquinone and bisphenol A, or hydrogenation products of them.

Besides, oxygen-containing terpene hydrocarbon resins can be also reaction products of terpene monomer with α,β-unsaturated carboxylic acids such as maleic acid and fumaric acid, or hydrogenation products of them.

Furthermore, exemplified as oxygen-containing terpene hydrocarbon resins are also polyhydric phenol compounds having terpene skeleton which are obtained by adding 2 molecules or more of phenols such as phenol, cresol, hydroquinone and bisphenol A to a molecule of cyclic terpene compound, or hydrogenation products of them.

The above reaction products of terpene monomer with phenols can be obtained, for example, by carrying out Friedel-Crafts reaction using these compounds, and the hydrogenation products can be obtained by hydrogenating these compounds by well-known methods. These are called terpene diphenol, terpene phenol resin or terpene-phenol copolymer resin in the market. As products on the market, there are, for example, "YS Polystar" and "Mighty Ace" (trade names, made by Yasuhara Chemical Co., Ltd.)

The reaction products of terpene monomer with α,β-unsaturated carboxylic acids can be obtained, for example, by carrying out Diels-Alder reaction using both compounds, and the hydrogenation products can be obtained by hydrogenating these compounds by well-known methods. These are called acid-modified terpene resin or acid-modified terpene copolymer resin in the market. As a product on the market, there is, for example, "TM-60" (trade name, made by Yasuhara Chemical Co.)

Moreover, polyhydric phenol compounds having terpene skeleton which are obtained by adding 2 molecules or more of phenols to a molecule of cyclic terpene compound can be obtained, for example, by carrying out Friedel-Crafts reaction using terpene monomer and phenols in the equivalent ratio of 1 : 2, and the hydrogenation products can be obtained by hydrogenating these compounds by well-known methods. As a product on the market, there is, for example, "YP-90" (trade name, made by Yasuhara Chemical Co.).

Exemplified as "oxygen-containing hydrocarbon resin" is secondly oxygen-containing hydrocarbon wax, for example, hydroxyl group-containing hydrocarbon wax. The wax has polyolefin hydrocarbon skeleton, and hydoxyl groups at its side chains or terminals, and it is solid at the normal temperature. It is an alcohol having carbon number of about 100-500. These waxes can be produced, for example, by hydrogenating polybutadiene having hydoxyl groups at the terminals. As a product on the market, there is "Polytale H" (trade name, made by Mitsubishi Chemical Corp.) Besides, oxygen-containing waxes can be also produced by introducing oxygen atoms into hydrocarbon waxes by means of peroxide treatment.

Next, in the first feature of the present invention, exemplified as "thermoplastic elastomer each containing structural units derived from α, β-unsaturated carboxylic acid or its anhydride" which is mixed with thermoplastic resin, preferably LCP, is the one of which a glass transition temperature is low, preferably below the room temperature. From the viewpoint of structure, these are classified into the following three main groups.

### (1) Thermoplastic elastomer of random copolymer type each containing structural units derived from α,β-unsaturated carboxylic acid or its anhydride as one of the structural units in the main chain

For example, in producing elastomers of random copolymer type, it is obtained by adding α,β-unsaturated carboxylic acid or its anhydride to the reaction system. Precisely, styrene-maleic anhydride copolymer, acrylic acid-acrylic ester copolymer and the like are exemplified.

### (2) Thermoplastic elastomer of block copolymer type containing the component parts obtained according to the above method (1)

It is obtained by mixing main chain of block parts with the structural units derived from α,β-unsaturated carboxylic acid or its anhydride. For example, when producing styrene-butadiene-styrene block copolymer, styrene-butadiene-styrene block copolymer containing blocks of styrene-maleic anhydride copolymer is obtained by copolymerizing styrene block and α,β-unsaturated carboxylic acid or its anhydride, for instance, maleic anhydride. The thermoplastic elastomer of block copolymer type of the present item can be obtained by hydrogenating butadiene block parts of the above copolymer selectively. The above hydrogenation product (SEBS) is thermoplastic in the existence of styrene block. Therefore, the amount of maleic anhydride in copolymerization is so limited that thermoplastic property owing to styrene block is not hindered.

### (3) Modified thermoplastic elastomer which is obtained by modifying a thermoplastic resin previously produced with α,β-unsaturated carboxylic acid or its anhydride

For example, it is obtained by adding α,β-unsaturated carboxylic acid or its anhydride to thermoplastic elastomers such as ethylene-propylene rubber, ethylene-α-olefin copolymer containing 15-80 mol % of α -olefin having C₄ or higher carbon and hydrogenated styrene-ethylene-butadiene-styrene block copolymer, and kneading the mixture in a molten state in the presence of organic peroxide.

As for the examples of products on the market of the above elastomers, exemplified as styrene-maleic anhydride copolymer of (1) is SMA Resin (trade name, made by Fujii Yoshi Tsusho Co., Ltd.), and as hydrogenated styrene-ethylene-butadiene-styrene block copolymer modified with maleic anhydride of (2) or (3) are Kraton (trade name, made by Shell Kagaku K. K.) and Toughtech M (trade name; SEBS modified with maleic anhydride, made by Asahi Chemical Industry Co., Ltd.).

These thermoplastic elastomers each containing the structural units derived from α,β-unsaturated carboxylic acid or its anhydride are characterized in that, (1) owing to the glass transition temperature being below the room temperature, the molecules move actively in the wide range of temperature after thermotropic liquid-crystal polymer solidifies at a relatively high temperature, and cause interactions with a metallic material, and (2) the functional groups derived from α,β-unsaturated carboxylic acid or its anhydride contained therein increase adhesiveness by causing hydrogen bond with the metal surface or triazinethiol compounds existing on the metal surface.

Further, a polarity is generated from α,β-unsaturated carboxylic acid or its anhydride and increases affinity between the above elastomer and LCP. Therefore, the elastomer disperses smoothly into the LCP composition. As a result, bonding state is made uniform.

In the first feature of the present invention, "polyamide resin" mixed in thermoplastic resin, preferably LCP, is usually produced by condensing diamine and dicarboxylic acid. Amino group (-NH2) which is generated when diamine compound is placed at the end of molecule chain, or amide combination (-CONH-) generated in a reaction of diamine compound and dicarboxylic acid cause strong interactions with the metal surface or triazinethiols on the metal surface, thereby giving excellent bonded composite.

In polyamide resins, non-liquid-crystal polyamide resins having high melting points such as aromatic polyamide, polyamide-46 and polyamide-66 are excellent in that they do not largely impair heat stability of LCP.

On the other hand, polyamide elastomers having low melting points or low glass transition temperatures move actively in the wide range of temperature. Moreover, the interactions of the functional groups such as amino group and amide combination with a metallic material can be expected, which is preferable to give bonded composites having the more improved adhesiveness.

The above polyamide elastomers are classified into the following two main groups from the viewpoint of structure, both of which are utilized preferable.

The first of them is a polyamide resin, which contains any of aliphatic dicarboxylic acid, aliphatic diamine, amino acid and lactam having carbon number of 10 or more, as monomer. Polyamide-610 (made from hexamethylenediamine and sebacic acid), polyamide-11 (11-amino-undecanoic acid), polyamide-12 (ω-laurolactam or 12-aminoundecanoic acid) and the like are exemplified.

The second of them is of block copolymer type having a hard segment and a soft segment in structure, that is, polyamide block copolymer having polyamide structures as hard segment and polyether or polyether ester structures as soft segment.

Exemplified as polyamide structures composing a hard segment are polyamide-6, polyamide-66, polyamide-610, polyamide-612, polyamide-11, polyamide-12, aromatic polyamide and the like.

Exemplified as polyether or polyether ester structures composing a soft segment are polyethylene glycol, polypropylene glycol, polytetramethylene glycol and the like.

These are readily available on the market. The particular examples are introduced in "Thermoplastic elastomer" (Feb. 15, 1991) Kagakukogyo Nippo Co., Ltd., p. 210-235, and they can be used as polyamide elastomer in the present invention. Definitely, exemplified as polyamide thermoplastic elastomer having the structure of polyamide 12 as hard segment and the structure of polyether as soft segment is "PAE 1220U" (trade name, made by Ube Industries Ltd.).

Further, the structures are described, for example, in B. M. Walker, C. P. Rader "Handbook of Thermoplastic Elastomers (second edition)" (1988) Van Nostrand Reinhold, New York, p. 258-282 (chapter 8), and in N. R. Legge, G. Holden, H. E. Schroeder "Thermoplastic Elastomers" (1987) Hanser, New York, p. 197-214 (chapter 9B).

Then, in the first feature of the present invention, "non-liquid-crystal polyester resin" mixed in thermoplastic resin, preferably LCP, is lower in melting point and glass transition temperature than LCP. Accordingly when compositions solidily from a molten state, non-liquid-crystal polyester resin solidifies slowly, and the molecules move freely during the solidifying process of molten resin. As a result, resins are supposed to cause interactions with the metal surface or triazine thiols on the metal surface very often, and produce excellent bonded composites.

Exemplified as non-liquid-crystal polyester resins are polyester resins having high melting points such as PBT (polybutyleneterephthalate), PCT (polycyclohexanedimethyleneterephthalate) and PET (polyethyleneterephthalate), which are desirable because they do not largely impair heat stability of liquid-crystal polymer.

Further, in the polyester thermoplastic elastomers having low melting points or low glass transition temperatures, molecular motion is active in the wide range of temperature. Accordingly, the interaction between the elastomer in a molten state and a metallic material is liable to occur, which gives preferably bonded composite excellent in adhesiveness.

The polyester thermoplastic elastomers used herein can be classified into the following two groups from the viewpoint of macroscopic structure.

The first of the polyester thermoplastic elastomers is the one which is obtained by substituting the structural unit derived from dicarboxylic acid having long alkyl chains of 30 or more in carbon number such as dimer acid for at least a part of the structural unit derived from dicarboxylic acid in the polyesters composed of aromatic dicaboxylic acids such as PET (polyethyleneterephthalate), PBT (polybutyleneterephthalate), PCT (polycyclohexanedimethyleneterephthalate) and PEN (polyethylenenaphthalate) and aliphatic diols.

The structural units derived from the dicarboxylic acids other than dimer acid are preferably those derived from aromatic dicarboxylic acids such as terephthalic acid and naphthalenedicarboxylic acid. The structural units derived from diols are those derived from aliphatic diols such as ethylene glycol, 1,4-butanediol and 1,4-cyclohexanediol.

The typical dimer acid used therein is dicarboxylic acids having carbon number 36, which is obtained by thermally polymerizing vegetable unsaturated fatty acids obtained from drying oil or semi-drying oil such as tall oil. Dimer acids having largely different structures are obtained depending on the combinations of various reactions such as polymerization, cyclization and isomerization, by changing feed materials, the presence and the kind of catalysts, reaction conditions, separating conditions after reaction and so forth. In the present invention, any type of structures in dimer acids can be used.

Exemplified as typical structures of hydrogenated dimer acids are three types, namely, straight-chain aliphatic, alicyclic and aromatic type of long chain carboxylic acids as shown in the following formulae [V], [VI] and (VII). 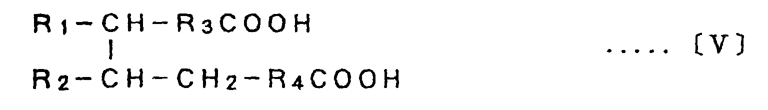 (In the formula, R₁ to R₄ are the same or different hydrocarbon groups and the sum of carbon atoms is 31.) 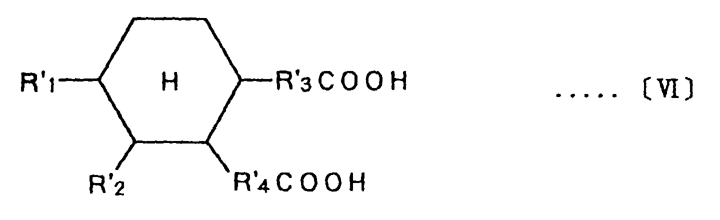 (In the formula, R'₁ to R'₄ are the same or different hydrocarbon groups and the sum of carbon atoms is 28.) 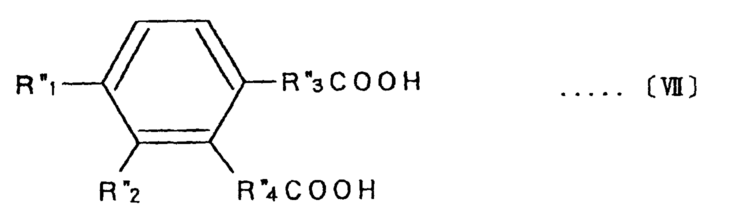 (In the formula, R''₁ to R''₄ are the same or different hydrocarbon groups, and the sum of carbon atoms is 28.)

Exemplified as typical hydrogenated dimer acids are "PRIPOL 1008" (trade name; dimer acid having carbon number 36, mol ratio of aromatic : alicyclic : straight-chain aliphatic = 9 : 54 : 37), "PRIPOL 1009" (trade name; dimer acid having carbon number 36, mol ratio of aromatic : alicyclic : straight-chain aliphatic = 13 : 64 : 23) and their ester derivatives, for example, "PRIPLAST 3008" (trade name) which is a dimethyl ester of the above dimer acid "PRIPOL 1008", which are all made by Unichema Co. These can be used in condensation separately or as a mixture with other dimer acids.

Further, exemplified as a dimer acid used in the present invention is "Haridimer 300" (trade name) made by Harima Chemical Inc., which is a mixture as shown in the following formula.

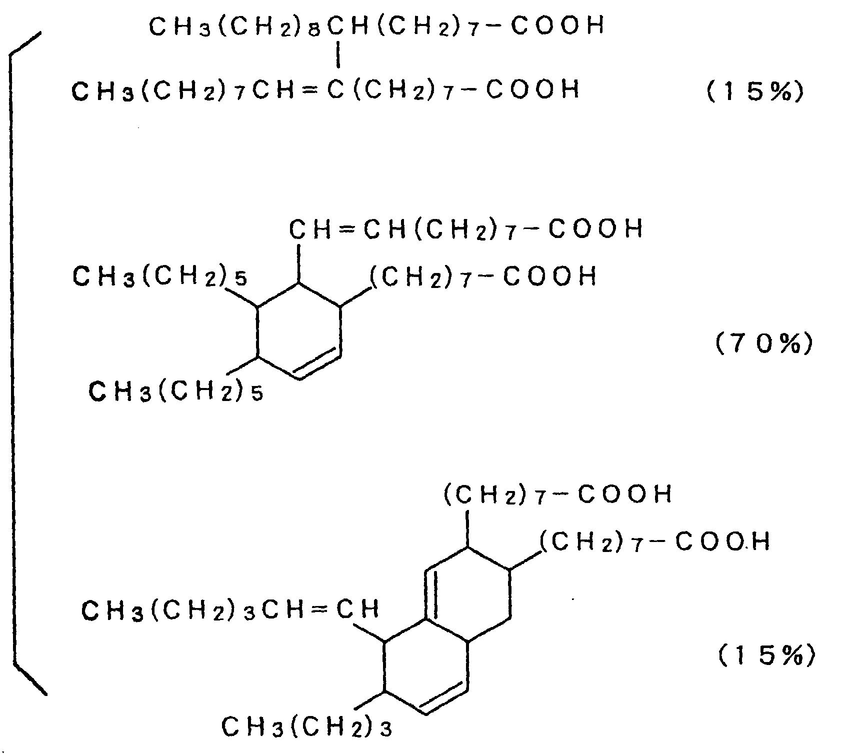

The amount used of dicarboxylic acid having dicarboxylic acid having long alkyl chains of 30 or more in carbon number, such as dimer acid or hydrogenated dimer acid is 0.1-30 mol %, preferably 1-20 mol %, further preferably 3-10 mol % to the total mols of the structural units corresponding to dicarboxylic acids of polyester elastomer.

As an example, there is an elastomer which is produced by mixing the above-mentioned dimer add in the above ratio separately or as a mixture, when PBT is produced using dimethyl terephthalate and 1,4-butanediol as feed materials. These can be produced according to the methods described in Japanese Laid-Open Patent Publication No. 5-51520, Japanese Laid-Open Patent Publication No. 5-117512, Japanese Laid-Open Patent Publication No. 5-171015, Japanese Laid-Open Patent Publication No. 5-214219, Japanese Laid-Open Patent Publication No. 5-295240, Japanese Laid-Open Patent Publication No. 6-73277 and Japanese Laid-Open Patent Publication No. 8-217965. Exemplified as products on the market of thermoplastic elastomer containing hydrogenated dimer acid are "PO 2120" and "PO 2121" (trade names) made by Kanebo Ltd.

Further, the polyester thermoplastic elastomers obtained by copolymerization with dimer acids like these improve the fluidity of thermotropic liquid-crystal to decrease the required charging pressure in injection molding and, thereby also avoiding the damages of members for embedding such as lead frame.

The second of the polyester thermoplastic elastomer is a block polyester copolymer consisting of hard segments and soft segments from the viewpoint of macroscopic structure. It is a block copolymer having crystalline polyester structure as hard segment and polyether or amorphous polyester structure as soft segment. Exemplified as structures forming hard segments are polyester structures consisting of aromatic dicarboxylic acid and aliphatic diol, corresponding to PET, PBT, PEN, PCT and so on. Then, exemplified as structures forming soft segments are polyether structures corresponding to polyethylene glycol, polypropylene glycol, polytetramethylene glycol and so forth. These are readily available on the market, and are described, for example, in "Thermoplastic elastomer" (Feb. 15, 1991), Kagaku Kogyo Nippo Co. Ltd., p. 184-207.

Further, the structures are described, for example, in B. M. Walker, C. P. Rader "Handbook of Thermoplastic Elastomers (second edition)" (1988) Van Nostrand Reinhold, New York, p. 181-223 (chapter 66), and in N. R. Legge, G. Holden, H. E. Schroeder "Thermoplastic Elastomers" (1987) Hanser, New York, p. 163-196 (chapter 8).

It is supposed that the first of the above polyester thermoplastic elastomers has a random structure where soft segments exist uniformly and finely, and the second of them has a block structure where soft segments exist locally.

In the first feature of the present invention described above in detail, well-known methods can be adopted to mix thermoplastic resin which is to be bonded to a metallic material, preferably one having a surface treated with a triazinethiol compound, with an agent for enhancing the effect of adhesion.

For example, it is possible to knead previously an agent for enhancing the effect of adhesion and a thermotropic liquid-crystal in an appropriate compound ratio in a molten state with a kneader, or to knead them in a molten state in the melting step with an injection molding machine. The compound ratio is adjusted in due consideration of the balance of heat stability rigidity, workability and so forth.

In order to obtain resin materials for embedding of usual electrical or optical members, each agent for enhancing the effect of adhesion is utilized in a range of 0.5-40 % to the whole resin components.

In the case of oxygen-containing hydrocarbon resin, it is used preferably in 0.1-30 parts by weight, further preferably 0.5-20 parts by weight, to 100 parts by weight of thermoplastic resin. Further, in the cases of thermoplastic elastomer each containing structural units derived from α, β-unsaturated carboxylic acid or its anhydride, and polyamide thermoplastic elastomer, 1-30 parts by weight of each elastomer is preferably mixed with 99-70 parts by weight of thermotropic liquid-crystal resin (the sum of both components : 100 parts by weight). In the case of polyester thermoplastic elastomer, 1-40 parts by weight of the above elastomer is preferably mixed with 99-60 parts by weight of thermotropic liquid-crystal resin (the sum of both components : 100 parts by weight).

To resin compositions used in the first of the present invention, various additives can be added depending on the object. For example, there are inorganic or organic fillers (glass fiber, carbon fiber, talc, mica, calcium carbonate, day, calcium sulfate, magnesium hydroxide, silica, alumina, barium sulfate, titanium oxide, zinc oxide, graphite, wood flour, whiskers of various kinds, metallic powder, metallic fiber and so forth), stabilizers of various kinds (antioxidant, UV absorber, light stabilizer, metal deactivator and so forth), pigment, dye, plasticizer, oil, lubricant, nucleating agent, antistatic agent, flame retardant and so forth.

The amount of filler added is generally in the range of 1-90% by weight, preferably 5-85% by weight to the total weight of resin composition containing the above various additives.

Further, in the case of thermoplastic resin, especially the thermoplastic resin such as liquid-crystal resin, which shows remarkable anisotropy of shrinkage in solidifying, relaxation of anisotropy of shrinkage is also effective to increase adhesiveness. Because the anisotropy of shrinkage of thermoplastic resin functions inevitably as a tearing force in the relation with a metallic material showing isotropic shrinkage, it is expected that an adhesiveness is increased by restraining or relaxing anisotropy of shrinkage of thermoplastic resin. In order to restrain or relax anisotropy of shrinkage, the method of blending the other thermoplastic resin having less anisotropy of shrinkage, or the method of compounding the filler having small aspect ratio is effective.

Taking the case of liquid-crystal having a high anisotropy of shrinkage, exemplified as the other thermoplastic resins blended therewith having less anisotropy of shrinkage are polycarbonate resin, polyarylate and the like. 1-30 parts by weight of the other thermoplastic resins having less anisotropy of shrinkage can be mixed with 100 parts by weight of thermoplastic resin.

Exemplified as fillers having small aspect ratios compounded in order to restrain or relax anisotropy of shrinkage are granular fillers such as talc, silica, calcium carbonate ad the like. The aspect ratio is preferably 10 or less. The amount of the filler having small aspect ratio is in the range of 1-90% by weight, preferably 5-85% by weight to the total weight of resin composition containing the above various additives.

Moreover, in order to prolong the duration (time) of active molecular motion practically, as well as to reduce apparent glass transition temperature by compounding thermoplastic resin, there is a method of using a cooling temperature of mold higher than usual. Definitely, it is preferable to set the range of:
(a glass transition temperature of thermoplastic resin - 20°C)
to (melting point of thermoplastic resin + 20°C) as the cooling temperature of mold. The temperature of this range is generally higher than the cooling temperature of mold usually used.

Further, in the insert molding, members for insert are often preheated. Setting the preheating temperature higher than usually used is also effective for the above purpose. Definitely, in the same way as the above-mentioned, it is preferable to set the range of:
(glass transition temperature of thermoplastic resin - 20°C)
to (melting point of thermoplastic resin + 20°C) as the preheating temperature of members for insert. The temperature of this range is generally higher than the preheating temperature usually used.

In the first feature of the present invention, as above-mentioned, the effect of adhesion is obtained by the interaction between the metal surface and an agent for enhancing the effect of adhesion contained in thermoplastic resin, the interaction between a triazinethiol compound on the metal surface and thermoplastic resin, or the interaction between a triazinethiol compound on the metal surface and an agent for enhancing the effect of adhesion contained in thermoplastic resin. Therefore, in order to obtain these interactions sufficiently, it is necessary to bring a thermoplastic resin m a molten state into contact with a metallic material, preferably one treated with a triazinethiol compound. Especially, in utilizing an agent for enhancing the effect of adhesion contained in a thermoplastic resin, the above interaction can be increased by using a molten resin so that the agent for enhancing the effect of adhesion is transferred from the inner part of thermoplastic resin to its surface by the positive molecular motion and contact with the metal surface. As the above, it is very important to bring a thermoplastic resin in a molten state into contact with a metallic material.

The obtained resin composition is injected in a molten state with an appropriate melt molding machine such as injection molding machine, and bonded under molten resin with a metallic material, preferably those treated on its surface with a triazinethiol compound. Taking the case of lead frame as a definite member, a metallic lead frame is preferably treated on its surface with a triazinethiol compound to become an insert member used in embedding. This member is set (mounted) in a mold by means of conventional method, embedded by injecting molten resin and formed into a bonded composite as embedded parts.

Further, it is also possible to obtain bonded composites by using a metallic material or one processed with a surface treatment as out-sert members and injecting molten resin by means of out-sert molding. Besides, it is possible to obtain bonded composites by contacting a resin into contact with a metallic material or one processed with a surface treatment, heating and melting resin and carrying out hot press molding.

The bonded composites of the present invention are used as general industrial parts, and various parts of electrical, electronic and optical fields. Exemplified as typical forms of these parts are parts of motorcar such as lamp socket, distributor cap, ignition coil, fuse case, switches of various kinds, bracket, bobbin, intake temperature control panel, bimetal vacuum switching valve and gasoline tank, electrical parts such as resin coated steel plate, resin coated metal pipe, connector, bracket terminal base, coil bobbin, tuner parts relay, socket, switch, machine motor case, CD player case, repeating terminal, fuse case, capacitor case, CD player chassis and HDD chassis, general industrial parts such as outer parts of pump casing, camera and the like, and members for embedding lead frames used in electrical, electronic and optical fields.

Then, a second feature of the present invention relates to a bonded composite, which is formed by bonding a metallic material, preferably one having a surface treated with a triazinethiol compound, and a thermoplastic resin which contains at least one constituent monomer selected from the group consisting of aromatic hydroxylamines, aromatic diamines and aromatic aminocarboxylic acids.

In the above invention, in order to increase the adhesiveness between a metal and LCP, LCP which contains at least one constituent monomer selected from the group consisting of aromatic hydroxylamines, aromatic diamines and aromatic aminocarboxylic acids is selected to be bonded in a molten state with metal. Further, in order to increase the adhesiveness with a metal by taking advantage of the interaction between nitrogen-containing group as a component of LCP and a triazinethiol compound put on the metal surface with surface treatment, it is preferable to add the above agent for enhancing the effect of adhesion to LCP.

The metallic material used here can be the same as one used in the first feature of the present invention, and it is possible in the same way to increase an adhesiveness by processing with surface treatment using a triazinethiol compound shown in the formula [I].

Exemplified as LCP used in the second feature of the present invention are liquid-crystal polyester-amide, polyester-amide-carbonate and the like, preferably thermotropic liquid-crystal polyester-amide, further preferably aromatic polyester-amide.

The aromatic hydroxylamine and aromatic diamine exemplified as component monomers of the above LCP can be the same as the component (e) in the components from (a) to (e) described as typical monomers composing thermotropic liquid-crystal polyester in the first feature of the present invention. Further, exemplified as aromatic aminocarboxylic acids are m-aminobenzoic acid, p-aminobenzoic acid, p-(4-aminophenyl)benzoic acid and the like.

Aromatic hydroxylamine, aromatic diamine and aromatic amoinocarboxylic acid can be used separately or as a mixture.

Although LCP can be composed of only aromatic hydroxylamine, aromatic diamine and aromatic amoinocarboxylic acid, usually it contains the above component monomers from (a) to (d).

It is possible to add amino groups at the end of LCP, or add amide combination (-NR-CO-) in a main chain or a side chain by using LCP having at least one constituent monomer selected from the group consisting of aromatic hydroxylamine, aromatic diamine and aromatic amoinocarboxylic acid. Herein, R in the above amide combination indicates hydrogen atom or bonding. Therefore, the thermotropic liquid-crystal resin in the present invention contains amino group, or amide combination in a main chain or a side chain.

The reason why LCP having at least one constituent monomer selected from the group consisting of aromatic hydroxylamine, aromatic diamine and aromatic amoinocarboxylic acid gives an excellent bonded composite is supposed to be that strong interactions exist between the groups generated by nitrogen-containing groups in these compounds when placed at the end of molecule, such as amino group or amide combination (-NR-CO-) formed by amino group with carboxylic acid, and the metal surface or triazinethiols on the metal surface.

Exemplified as thermotropic liquid-crystal resins used in the second feature of the present invention are preferably thermotropic liquid-crystal polyester-amide as described above. The resin can be produced from the above monomers by using various methods for producing ester such as fusion acidolysis and slurry polymerization. For example, methods for producing some of thermotropic liquid-crystal polyester-amides are disclosed in Japanese Laid-Open Patent Publication No. 57-177021, Japanese Laid-Open Patent Publication No. 61-254622, Japanese Laid-Open Patent Publication No. 01-319534 and so forth.

Total content of the constituent monomers such as aromatic hydroxylamine, aromatic diamine and aromatic amoinocarboxylic acid is 50 mol % or less, preferably in the range of 1-40 mol %, to 100 mol % of the total content of monomers.

The range of molecular weight of thermotropic liquid-crystal resins suitable for use in the present invention and the method of measurement are the same as those in the first feature of the present invention.

Further, as the polyester part in the above aromatic polyester-amide, those containing the constituent monomers shown in the formulae [II], [III] and [IV] are desirable.

In the second feature of the present invention, agents for enhancing the effect of adhesion and additives of various kinds can be compounded in the same way as in the first feature of the present invention. Further, it is preferable in the same way to set the cooling temperature of mold and preheating temperature of members for insert higher than usually used. The same may be applied to the method for compounding oxygen-containing hydrocarbon and the like, method for producing bonded composites and the uses.

Then, the third feature of the present invention relates to LCP compositions which is used for the above bonded composite and suitable as embedding resin.

Namely, it relates to a thermotropic liquid-crystal resin composition containing 0.5-40 % by weight of at least one resin selected from the group consisting of hydrocarbon resin, thermoplastic elastomer each containing structural units derived from α,β-unsaturated carboxylic acid or its anhydride, polyamide thermoplastic elastomer, and polyester thermoplastic elastomer.

The thermotropic liquid-crystal resin used here is an aromatic polyester consisting of the components from (a) to (e) in the same way as in the first feature of the present invention.

As thermoplastic elastomer each containing structural units derived from α,β-unsaturated carboxylic acid or its anhydride, polyamide thermoplastic elastomer, and polyester thermoplastic elastomer in the above resins, the agents for enhancing the effect of adhesion can be used, which are described in detail in the first feature of the present invention to be effective in forming bonded composites with metallic materials.

Exemplified as the above hydrocarbon resin is "terpene resin", and it is possible to reduce the charging pressure required for injection and charging in a mold by adding this to LCP. Hereafter, terpene resins will be described.

Terpene resin used in the above invention means a single polymer of terpene compounds or a copolymer of terpene resins with polar compounds, which has a polymer consisting of 3-20 molecules of monomer as main component. Further, the hydrogenated products are used.

Exemplified as polar compounds which can polymerize with terpene compounds are aromatic vinyl monomers, phenol compounds, unsaturated carboxylic acids and the like.

The single polymer of terpene compounds or the copolymer of terpene resins with polar compounds can be obtained by carrying out a reaction using a single terpene compound or a mixture of terpene compound with aromatic vinyl monomer, phenol compound, unsaturated carboxylic acid or the mixture thereof in the presence of Friedel-Crafts catalyst in an organic solvent. The hydrogenated products can be produced by the well-known method for hydrogenation.

Exemplified as terpene compounds are 〈-pinene, β-pinene, limonene, α-terpinene, β-terpinene, γ-terpinene, dipentene and the like.

Exemplified as aromatic vinyl monomers are styrene, α-methylstyrene, vinyltoluene and the like.

Exemplified as phenol compounds are phenol, cresol, bisphenol A and the like.

Further, exemplified as unsaturated carboxylic acids are α,β-unsaturated carboxylic acid or its anhydride, such as maleic anhydride and the like. In the case of copolymer of terpene compound and unsaturated carboxylic acid, the effects of increasing adhesion strength as well as reducing a charging pressure can be obtained.

As the terpene resins obtained as above, those having trade names such as "YS Resin PX", "YS Resin TO", "YS Resin TR", "Croalin", "YS Polystar", "Mighty Ace", "YP-90" and "TM-60" are readily available on the market.

The petroleum resin having an alicyclic structure, which is obtained by hydrogenating aromatic rings of C₉ petroleum resin, has a similar structure to the terpene resin so that it is expected to have the same effect. Therefore, the terpene resin used in the present invention includes also hydrogenated C₉ petroleum resin. As petroleum resin like this, for example, alicyclic saturated hydrocarbon resins made by Arakawa Chemical Industries Ltd., namely, "Arcon P" (trade name, completely hydrogenated product) and "Arcon M" (trade name, partially hydrogenated product) are available.

Among these, the compound containing main polymers consisting of 3-10 molecules is preferable, which is obtained by the reaction with terpene compounds and phenol compounds.

Although the reason why the effect of the present invention is obtained is not clear, it is supposed that terpene resins enter readily among the molecules of thermotropic liquid-crystal resin, and increase the sliding movement among them. Therefore, among terpene resins, the compound containing main polymers obtained by the reaction with terpene compounds and phenol compounds is preferable.

To the compositions of the above invention, the other resins can also be added. Though both thermoplastic resin and thermosetting resin may be used, exemplified as the other resins are preferably what is called thermoplastic engineering plastics, such as polyamide resin, polycarbonate resin, polyethyleneterephthalate resin, polybutyleneterephthalate resin, polyphenylenesulfide resin, polyethersulfone resin, polyetherketone resin and polyetheretherketone resin.

The amount used of the other thermoplastic resins described above is 1-200 parts by weight, preferably 1-100 parts by weight, further preferably 1-50 parts by weight to 100 parts by weight of LCP used in the present invention.

Further, improving modifiers or fillers can be added to the resin composition of the above invention in order to improve heat stability and mechanical strength. Exemplified as improving modifiers or fillers are fibrous ones, granular ones and the mixture thereof.

Exemplified as fibrous improving modifiers are inorganic fibers such as glass fiber, "shirasu" glass fiber, alumina fiber, silicon carbide fiber, ceramic fiber, asbestos fiber, gypsum fiber, metallic fiber (for instance, stainless steel fiber and the like), and carbon fibers.

Exemplified as granular improving modifiers are silicates such as wollastonite, sericite, kaolin, mica, clay, bentonite, asbestos, talc and alumina silicate, metallic oxides such as alumina, silicon oxide, magnesium oxide, zirconium oxide and titanium oxide, carbonates such as calcium carbonate, magnesium carbonate and dolomite, sulfate such as calcium sulfate, calcium pyrosulfate and barium sulfate, glass bead, boron nitride, silicon carbide, saloyan and so forth. These can be hollow, for example, hollow glass fiber, glass microballoon, "shirasu" balloon, carbon balloon and the like are exemplified.

The above improving modifiers can be pretreated with coupling agents containing silane or titanium if desired.

The improving modifiers or fillers can be incorporated in 80% by weight or less, preferably 70% by weight or less to the total of composition.

Further, usual additives such as antioxydant, heat stabilyzer, UV absorber, aggregate and release agent, colorants including dye and pigment, flame retardant, plasticizer and antistatic agent can be added to obtain the required properties.

Exemplified as heat stabilyzer are hindered phenols, hydroquinones, phosphites and substitution products thereof and so forth can be added.

Exemplified as UV absorbers are resorcinol, salicylates, benzotriazole, benzophenone and so forth.

As dye, nitrocin and others can be added, and as pigment, cadmium sulfate, phthalocyanine, carbon black and so forth.

In mixing LCP and terpene resin in the above invention, the conventional methods can be used. For example, a method of melting and mixing with an extruder, a method of incorporating terpene resins while composing LCP in a molten state, and so forth are used. In the present invention, the method of melting and mixing with an extruder is preferable, because it is simple and easy, nevertheless enables to make uniform. As apparatuses for kneading in a molten state, Banbury mixer, static mixer roller, kneader and others can be used continuously or in batch process. It is effective to operate a single-screw extruder or a twin-screw extruder continuously.

When mixing the above other thermoplastic resin, it may be added at the same time when the composition of the above invention is produced, or may be added in a previously produced composition of the present invention. Further, after the other resin is previously mixed in LCP, terpene resin may be added.

In the third feature of the present invention, the effect of improving low weld strength, peeling surface by fibrillation and warp owing to anisotropic shrinkage is obtained by adding the above polyester thermoplastic elastomers. These effects are more expressed when using thermoplastic polyester elastomer having random structure, than when using the one having block structure, in the two kinds of thermoplastic polyester elastomer described in the first feature of the present invention. Especially, when thermoplastic elastomer containing hydrogenated dimer acid is used, great effects can be obtained.

The reason that thermoplastic polyester elastomer having random structure, especially the one containing hydrogenated dimer acid gives excellent effects, is not dear. However, it can be presumed that a primary factor to eliminate the above problems of thermotropic liquid-crystal resin is mainly an interacion between soft segment parts in polyester thermoplastic elastomer and molecules of thermotropic liquid-crystal resin. Therefore, the thermoplastic elastomer containing hydrogenated dimer acid, which has random structure having soft segments dispersed uniformly and finely, can give interactions supposedly more uniformly and more widely than the one containing block structure, thereby giving more effect of improving characteristics of LCP.

In order to provide thermotropic liquid-crystal resin composition to be used as an embedding material in electrical, electronic and optical fields, or thermotropic liquid-crystal resin composition being able to give thin products by low pressure molding, polyester thermoplastic elastomers having low molecular weight is used preferably.

To improve this characteristics moreover, the above terpene resins can be added effectively.

In the third feature of the present invention, the amount of each resin added is in any case 0.5-40% by weight, preferably 3-20% by weight to the total of composition. When it is less than 0.5% by weight, the effect of the invention is not sufficient, and when it is more than 40% by weight, mechanical properties and others decrease remarkably. In the case of terpene resin, it is preferably 0.5-10% by weight, further preferably 1-3% by weight.

### BRIEF DESCRIPTION OF DRAWING

Fig. 1 (a) is a schematic cross-sectional view of a mold used for evaluating adhesive property, and Fig. 1 (b) is a plan view of the metallic material.
Fig. 2 (a) and Fig. 2 (b) are a side elevation and a front elevation, respectively, showing a test piece formed for measuring minimum filling pressure.
Fig. 3 is a plan view of a test piece for measuring weld strength.
Fig. 4 is a plan view of a test piece for measuring warp.

### BEST METHOD FOR CARRYING OUT THE INVENTION

In the following, the present invention will be described in more detail with examples.

### 1. Thermotropic Liquid-Crystal Resin

The compositions of thermotropic liquid-crystal resins used are as follows.

### 〈LCP〉

Thermotropic liquid-crystal resin having repeating units derived from phthalic acid / isophthalic acid / p-hydroxybenzoic acid / 4,4'-dihydroxybiphenyl, respectively is used, wherein the mol ratio is 0.75 / 0.25 / 3 / 1. By observing with a polarizing microscope installed with a hot stage, it showed an optical anisotropy in a molten state at 340°C and higher.

### 〈LCP-1〉

Amino type LCP, namely thermotropic liquid-crystal resin having repeating units derived from phthalic acid / isophthalic add /p-hydroxybenzoic acid / 4,4'-dihydroxybiphenyl / 4-aminophenol, respectively is used, wherein the mol ratio is 0.75 / 0.25 / 3 / 1 / 0.25. This resin showed also an optical anisotropy with the similar method as the above.

### 〈LCP-2〉

Amino type LCP, namely thermotropic liquid-crystal polymer having repeating units derived from phthalic acid / isophthalic acid / p-hydroxybenzoic acid / 4,4'-dihydroxybiphenyl / 4-aminophenol, respectively is used, wherein the mol ratio is 0.75 / 0.25 / 3 / 1 / 0.75. This resin showed also an optical anisotropy with the similar method as the above.

### 2. Agent for Enhancing Effect of Adhesion

Agents for enhancing the effect of adhesion used are as follows.

### 〈Oxygen-containing Hydrocarbon Resin, including Terpene Resins〉

### (1) Mighty Ace G-150 (trade name)

Hydrogenation product of Friedel-Crafts reaction product using a terpene compound and phenol, made by Yasuhara Chemical Co., Ltd. The name is sometimes abbreviated to "G-150" in the table.

### (2) YP-90 (trade name)

Terpene-diphenol resin made by Yasuhara Chemical Co. Ltd.

### (3) TM-60 (trade name)

Diels-Alder reaction product using a terpene compound and maleic anhydride made by Yasuhara Chemical Co., Ltd.

### (4) Polytale H (trade name)

Oxygen-containing hydrocarbon wax made by Mitsubishi Chemical Corp.

### 〈Thermoplastic Elastomer〉

### (1) SEBS

Hydrogenated styrene-butylene-styrene block copolymer; trade name: Toughtech H1295, made by Asahi Chemical Industry Co., Ltd.

### (2) SEBS modified with maleic acid

Modified product with maleic anhydride of hydrogenated styrene-butylene-styrene block copolymer; trade name: Toughtech M1953, made by Asahi Chemical Industry Co., Ltd. The name is abbreviated to "MSE" in the table.

### (3) SMA Resin (trade name)

Styrene-maleic anhydride copolymer made by Fujii Yoshi Tsusho Co., Ltd. The name is abbreviated to "SMA" in the table.

### 〈Polyamide Resin〉

### (1) PA-6: polyamide 6

### (2) PA-12: polyamide 12

### (3) PAE 1210U (trade name)

Polyamide thermoplastic elastomer having a hard segment of polyamide 12 and a soft segment of polyether, made by Ube Industries Ltd.

### 〈Non-Liquid-Crystal Polyester Resin〉

### (1) PETE-1

Copolymer obtained by polycondensation after carrying out ester exchange with dimethylterephthalate containing 10 mol % of PRIPLAST (trade name, dimer acid dimethyl ester, made by Unichema Co.) and 1,4-butanediol; trade name: Kanebo PBT PO2120, made by Kanebo Ltd.

### (2) PETE-2

Polyester thermoplastic elastomer having a hard segment of PBT structure and a soft segment of polyether structure; trade name: Pelprene P-30B, made by Toyobo Co., Ltd.

### (3) PBT: Polybutyleneterephthalate

### 3. Surface Treatment of Metallic Material

The kinds of triazinethiol compound used and the method of surface treatment are as follows.

### (1) 1,3,5-triazine-2,4,6-trithiol monosodium salt (TTN)

The fixed metallic plate was soaked in a 0.4% aqueous solution of TTN at 80-90°C for 30 seconds, then dried at 40°C.

### (2) 1,3,5-triazine-2,4,6-trithiol triethanolamine (TEA)

The fixed metallic plate was put in an electrolytic bath containing 1% aqueous solution of TEA at 20°C, then treated electrochemically by applying a constant voltage (0.6V or less) for two minutes.

The metallic material "KFC" in the table is an iron-nickel alloy material for lead frame (trade name, made by Kobe Steel, Ltd.)

### 4. Measuring Method

The methods for measuring various properties are described in the following.

### 〈Evaluation of Adhesion〉

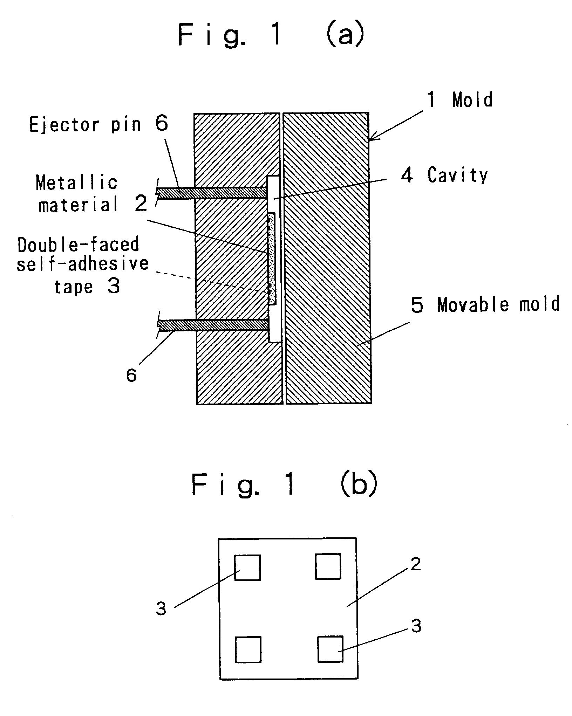

First, the method for bonding metallic material and resin will be described on reference to Fig. 1 (a) and Fig. 1 (b). Fig. 1 (a) is a schematic cross-section showing a mold 1 used for molding and Fig. 1 (b) is a plan of a metallic material 2.
(1) Metallic material 2 (plate, 50mm×50mm×0.5mm) is previously de-fatted and dried, then treated on the surface. After sticking a double-faced self-adhesive tape 3 on a part of one side of the above material, the material is attached to the inner wall of cavity 4 (100mm×100mm×1mm) of a single swing mold 2 for injection molding.
(2) The movable mold 5 is closed, and then the fixed thermoplastic resin is injected from a gate (not shown) into the cavity 4 to carry out injection molding. The cooling temperature of the mold is 50°C.
(3) The movable mold 5 is opened, then the molded product (bonded composite) is taken out by ejecting with an ejector pin 6.

The adhesiveness of the bonded composite obtained above is indicated with a ratio of A and B (A / B) shown as follows. Thus, 3 / 5 means that satisfactory bonding is obtained three times in five times of molding experiments in total.
A : Number of times in that an incorporated composite consisting of metallic material and resin is taken out from a mold. When bonding is unsatisfactory, metal sticks to the mold, and a resin plate alone is taken out. Thus, that an incorporated composite is taken out means that adhesion is sufficient.
B : Number of times of molding experiments.

### 〈Minimum Filling Pressure (1)〉

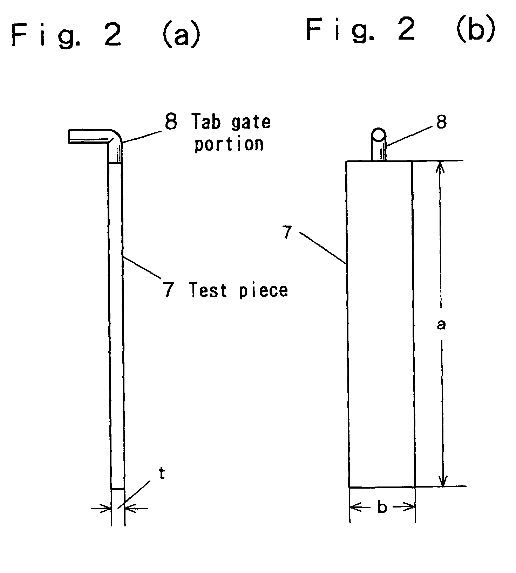

The minimum charging (filing) pressure in injection molding the test piece shown in Fig. 2 (a) and Fig. 2 (b) is determined. Fig. 2 (a) and Fig. 2 (b) are a side elevation and a front elevation, respectively, of the test piece. By injecting resin material from a tab gate to carry out injection molding, a rectangular test piece 7 is formed. The test piece shown is the one at the time when it is taken out from a mold, and so has a tab gate portion 8. The dimensions of test piece are a = 100mm and b = 20mm, and thickness (t) is variable in the range of 0.5 - 2mm, which is set according to each composition as shown in the table.

The value of minimum charging pressure is indicated by the relative value (%) to 100 of the value of corresponding relative example.

### 〈Weld Strength〉

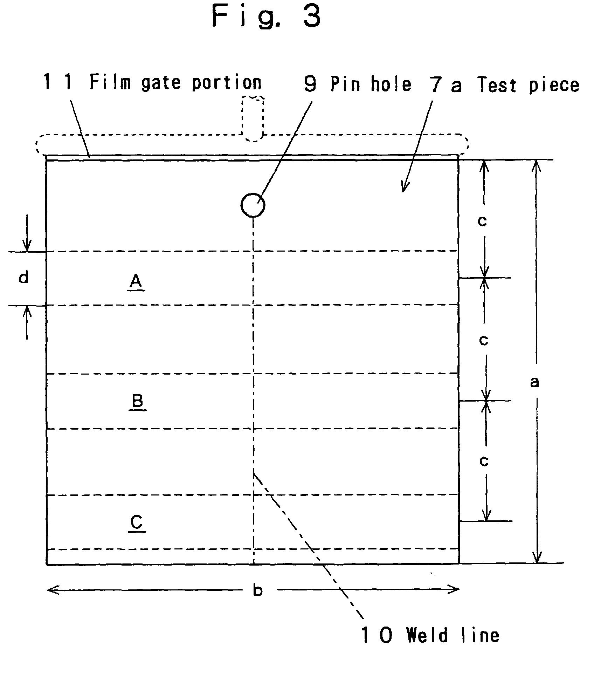

Fig. 3 is a plan showing a test piece for measuring weld strength. By using a mold having 5 φ pin and injecting resin material from the other side of 5 φ pin through the film gate portion 11 to carry out injection molding, a rectangular test piece 7a is formed, which has a weld line 10 on the downstream of pin hole 9. The test piece 7a shown is the one at the time when it is taken out from a mold, and so has a film gate 11. The dimensions are a=100mm, b=100mm, c=30mm and d=12.7mm, and thickness of the test piece is 3mm. Each part of A, B and C is cut out from this test piece and is used for measuring a bending strength.

Then, after removing 5 φ pin from the mold and carrying out injection molding similarly to form a test piece without weld line, the part of A is cut out and is used for measuring a bending strength.

Bending strengths of the test pieces of three kinds having weld lines are indicated by the relative value (%) to 100 of the bending strength of test piece without weld line.

### 〈Minimum Charging Pressure (2)〉

In the Fig. 3, when the test piece is formed using the mold which is not equipped with 5 φ pin, minimum charging pressure required is determined. The results are indicated by the relative value (%) to 100 of the value of corresponding relative example.

### 〈Warp〉

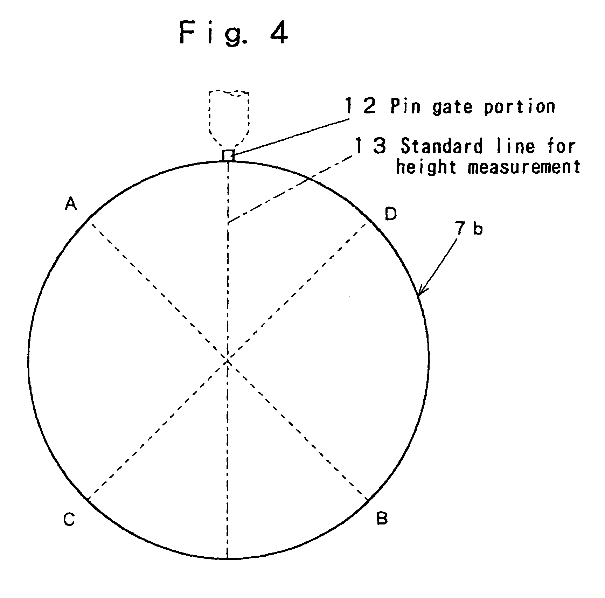

Fig. 4 is a plan showing a test piece for measuring warp. By injecting resin material from a pin gate to carry out injection molding, a disc-like test piece 7b is formed. The test piece 7b shown is the one at the time when it is taken out from a mold, and so has a pin gate portion 12. The diameter of disc is 100mm, and the thickness is 1.6mm.

The relative heights (mm) to a standard line for height measurement 13 of points A, B, C and D are determined for comparison.

### 〈Peeling Surface by Fibrillation〉

In Fig. 3, the surface of each test piece which is formed by injection molding using the mold without 5 φ pin is rubbed with a steel rod of 5mm in diameter using a force of 5 kgf ten times, where an adhesive tape on the market is wound around the rod, then the traces are observed visually The judgment is indicated by five grades of ⓞ , ○ , △, X and XX according to the appearance.

### 5. Examples on the Effect of Oxygen-Containing Hydrocarbon Resin

### 〈Test Examples 101-112〉

Thermotropic liquid-crystal resin (LCP) containing 40 wt % of granular silica was used as a thermoplastic resin. The effect of addition of terpene compound as an oxygen-containing hydrocarbon resin was tested. The results are shown in the following Tables 1 and 2.

**Table 1**

| | | Test Example | | | | | |
|---|---|---|---|---|---|---|---|
| | | 101 | 102 | 103 | 104 | 105 | 106 |
| Thermoplastic Resin | | LCP | LCP | LCP | LCP | LCP | LCP |
| Filler | Name | Granular silica | Granular silica | Granular silica | Granular silica | Granular silica | Granular silica |
| | wt % ⁽¹⁾ | 40 | 40 | 40 | 40 | 40 | 40 |
| Metallic Material | | Copper | Copper | Copper | Copper | Copper | Copper |
| Oxygen-Contg. carbon Resin | Name | --- | --- | --- | Mighty Ace G150 | TM-60 | YP-90 |
| | wt part ⁽²⁾ | --- | --- | --- | 8 | 8 | 8 |
| Evaluation of Adhesion | | 0/5 | 0/5 | 0/5 | 0/5 | 0/5 | 0/5 |

| | | | | | | | |
|---|---|---|---|---|---|---|---|
| Note: (1) Relative to 100 wt % of the total resin composition containing several additives. | | | | | | | |
| (2) Relative to 100 wt parts of thermoplastic resin. | | | | | | | |

**Table 2**

| | | Test Example | | | | | |
|---|---|---|---|---|---|---|---|
| | | 107 | 108 | 109 | 110 | 111 | 112 |
| Thermoplastic Resin | | LCP | LCP | LCP | LCP | LCP | LCP |
| Filler | Name | Granular silica | Granular silica | Granular silica | Granular silica | Granular silica | Granular silica |
| | wt % | 40 | 40 | 40 | 40 | 40 | 40 |
| Metallic Material | | Copper | Copper | Copper | Copper | Copper | Copper |
| Oxygen-Contg. Hydrocarbon Resin | Name | Mighty Ace G150 | TM-60 | YP-90 | Mighty Ace G150 | TM-60 | YP-90 |
| | wt part | 12 | 12 | 12 | 15 | 15 | 15 |
| Evaluation of Adhesion | | 1/5 | 0/5 | 0/5 | 2/5 | 1/5 | 1/5 |

### 〈Test Examples 201-230〉

Thermoplastic resins of polybutylene terephthalate (PBT) containing a filler of glass fiber, polyamide (PA66), polyphenylene sulfide (PPS) and thermotropic liquid-crystal resin (LCP) and several kinds of metallic materials which were surface-treated with triazinethiol, were bonded. The effect of addition of various terpene compounds as oxygen-containing hydrocarbon resins were tested and the results are shown in the following Tables 3-8.

**Table 3**

| | | Test Example | | | | |
|---|---|---|---|---|---|---|
| | | 201 | 202 | 203 | 204 | 205 |
| Thermoplastic Resin | | PBT | PA66 | PPS | LCP | LCP |
| Filler | Name | Glass fiber | Glass fiber | Glass fiber | Glass fiber | Glass fiber |
| | wt % | 30 | 30 | 40 | 30 | 40 |
| Metallic Material | | Copper | Copper | Copper | Copper | Copper |
| Oxygen-Containing Hydrocarbon Resin | | --- | --- | --- | --- | --- |
| Triazinethiol | | TTN | TTN | TTN | TTN | TTN |
| Evaluation of Adhesion | | 1/5 | 3/5 | 0/5 | 0/5 | 0/5 |

**Table 4**

| | | Test Example | | | | |
|---|---|---|---|---|---|---|
| | | 206 | 207 | 208 | 209 | 210 |
| Thermoplastic Resin | | PBT | PA66 | PPS | LCP | LCP |
| Filler | Name | Glass fiber | Glass fiber | Glass fiber | Glass fiber | Glass fiber |
| | wt % | 30 | 30 | 40 | 30 | 40 |
| Metallic Material | | Phosphor bronze | Phosphor bronze | Phosphor bronze | Phosphor bronze | Phosphor bronze |
| Oxygen-Containing Hydrocarbon Resin | | --- | --- | --- | --- | --- |
| Triazinethiol | | TTN | TTN | TTN | TTN | TTN |
| Evaluation of Adhesion | | 1/5 | 3/5 | 0/5 | 0/5 | 0/5 |

**Table 5**

| | | Test Example | | | | |
|---|---|---|---|---|---|---|
| | | 211 | 212 | 213 | 214 | 215 |
| Thermoplastic Resin | | PBT | PA66 | PPS | LCP | LCP |
| Filler | Name | Glass fiber | Glass fiber | Glass fiber | Glass fiber | Glass fiber |
| | wt % | 30 | 30 | 40 | 30 | 40 |
| Metallic Material | | 42 Alloy | 42 Alloy | 42 Alloy | 42 Alloy | 42 Alloy |
| Oxygen-Containing Hydrocarbon Resin | | --- | --- | --- | --- | --- |
| Triazinethiol | | TEA | TEA | TEA | TEA | TEA |
| Evaluation of Adhesion | | 1/5 | 2/5 | 0/5 | 0/5 | 0/5 |

**Table 6**

| | | Test Example | | | | |
|---|---|---|---|---|---|---|
| | | 216 | 217 | 218 | 219 | 220 |
| Thermoplastic Resin | | PBT | PA66 | PPS | LCP | LCP |
| Filler | Name | Glass fiber | Glass fiber | Glass fiber | Glass fiber | Glass fiber |
| | wt % | 30 | 30 | 40 | 30 | 40 |
| Metallic Material | | Copper | Copper | Copper | Copper | Copper |
| Oxygen-Contg. Hydrocarbon Resin | Name | Mighty Ace G150 | Mighty Ace G150 | Mighty Ace G150 | Mighty Ace G150 | Mighty Ace G150 |
| | wt part | 5 | 5 | 5 | 5 | 5 |
| Triazinethiol | | TTN | TTN | TTN | TTN | TTN |
| Evaluation of Adhesion | | 4/5 | 5/5 | 3/5 | 3/5 | 4/5 |

**Table 7**

| | | Test Example | | | | |
|---|---|---|---|---|---|---|
| | | 221 | 222 | 223 | 224 | 225 |
| Thermoplastic Resin | | PBT | PA66 | PPS | LCP | LCP |
| Filler | Name | Glass fiber | Glass fiber | Glass fiber | Glass fiber | Glass fiber |
| | wt % | 30 | 30 | 40 | 30 | 40 |
| Metallic Material | | Phosphor bronze | Phosphor bronze | Phosphor bronze | Phosphor bronze | Phosphor bronze |
| Oxygen-Contg. Hydrocarbon Resin | Name | TM-60 | TM-60 | TM-60 | TM-60 | TM-60 |
| | wt part | 5 | 5 | 5 | 5 | 5 |
| Triazinethiol | | TTN | TTN | TTN | TTN | TTN |
| Evaluation of Adhesion | | 4/5 | 5/5 | 4/5 | 4/5 | 4/5 |

**Table 8**

| | | Test Example | | | | |
|---|---|---|---|---|---|---|
| | | 226 | 227 | 228 | 229 | 230 |
| Thermoplastic Resin | | PBT | PA66 | PPS | LCP | LCP |
| Filler | Name | Glass fiber | Glass fiber | Glass fiber | Glass fiber | Glass fiber |
| | wt % | 30 | 30 | 40 | 30 | 40 |
| Metallic Material | | 42-Alloy | 42-Alloy | 42-Alloy | 42-Alloy | 42-Alloy |
| Oxygen-Contg. Hydrocarbon Resin | Name | YP-90 | YP-90 | YP-90 | YP-90 | YP-90 |
| | wt part | 5 | 5 | 5 | 5 | 5 |
| Triazinethiol | | TEA | TEA | TEA | TEA | TEA |
| Evaluation of Adhesion | | 2/5 | 5/5 | 3/5 | 3/5 | 3/5 |

### 〈Test Example 301-319〉

Using thermotropic liquid-crystal resin as a thermoplastic resin, several terpene compounds were added as oxygen-containing hydrocarbon resins. KFC's (trade name of lead frames made of iron-nickel alloy made by Kobe Steel, Ltd.) surface-treated with several kinds of triazinethiols, were used as metallic materials and, furthermore, several adhesion enhancing agents were used. The results of tests are shown in the following Tables 9- 12.

Still further, the test with adding polycarbonate resin (PC) as an example of a thermoplastic resin having small shrinkage anisotropy and another test to set the metal mold cooling temperature at 150°C which is higher than the ordinary cooling temperature, were carried out.

**Table 9**

| | | Test Example | | | | | |
|---|---|---|---|---|---|---|---|
| | | 301 | 302 | 303 | 304 | 305 | 306 |
| Thermoplastic Resin | | LCP | LCP | LCP | LCP | LCP | LCP |
| Filler | Name | Glass fiber | Talc | Granular silica | Glass fiber | Talc | Granular silica |
| | wt % | 30 | 30 | 40 | 30 | 30 | 40 |
| Metallic Material | | KFC | KFC | KFC | KFC | KFC | KFC |
| Oxygen-Contg. Hydrocarbon Resin | Name | Mighty Ace G150 | Mighty Ace G150 | Mighty Ace G150 | Mighty Ace G150 | Mighty Ace G150 | Mighty Ace G150 |
| | wt part | 5 | 5 | 5 | 5 | 5 | 5 |
| Triazinethiol | | --- | --- | --- | --- | --- | --- |
| Adhesive Effect Enhancing Agent | Name | --- | --- | --- | SEBS | SEBS | SEBS |
| | wt part⁽²⁾ | --- | --- | --- | 5 | 5 | 5 |
| Evaluation of Adhesion | | 0/5 | 0/5 | 0/5 | 1/5 | 2/5 | 2/5 |

| | | | | | | | |
|---|---|---|---|---|---|---|---|
| Note: (2) Relative to 100 wt parts of thermoplastic resin. | | | | | | | |

**Table 10**

| | | Test Example | | | | | |
|---|---|---|---|---|---|---|---|
| | | 307 | 308 | 309 | 310 | 311 | 312 |
| Thermoplastic Resin | | LCP | LCP | LCP | LCP | LCP | LCP |
| Filler | Name | Glass fiber | Talc | Granular silica | Glass fiber | Talc | Granular silica |
| | wt % | 30 | 30 | 40 | 30 | 30 | 40 |
| Metallic Material | | KFC | KFC | KFC | KFC | KFC | KFC |
| Oxygen-Contg. Hydrocarbon Resin | Name | Mighty Ace G150 | Mighty Ace G150 | Mighty Ace G150 | Mighty Ace G150 | Mighty Ace G150 | Mighty Ace G150 |
| | wt part | 5 | 5 | 5 | 5 | 5 | 5 |
| Triazinethiol | | --- | --- | --- | TTN | TTN | TTN |
| Adhesive Effect Enhancing Agent | Name | PAE | PAE | PAE | PETE-2 | PETE-2 | PETE-2 |
| | wt part | 5 | 5 | 5 | 5 | 5 | 5 |
| Evaluation of Adhesion | | 1/5 | 2/5 | 2/5 | 2/5 | 3/5 | 3/5 |

**Table 11**

| | | Test Example | | |
|---|---|---|---|---|
| | | 313 | 314 | 315 |
| Thermoplastic Resin | | LCP | LCP | LCP |
| Filler | Name | Glass fiber | Talc | Granular silica |
| | wt % | 30 | 30 | 40 |
| Metallic Material | | KFC | KFC | KFC |
| Oxygen-Contg. Hydrocarbon Resin | Name | Mighty Ace G150 | Mighty Ace G150 | Mighty Ace G150 |
| | wt part | 5 | 5 | 5 |
| Triazinethiol | | TTN | TTN | TTN |
| Adhesive Effect Enhancing Agent | Name | MSE | MSE | MSE |
| | wt part | 5 | 5 | 5 |
| Evaluation of Adhesion | | 3/5 | 3/5 | 5/5 |

**Table 12**

| | | Test Example | | | |
|---|---|---|---|---|---|
| | | 316 | 317 | 318 | 319 |
| Thermoplastic Resin | | LCP | LCP | LCP | LCP |
| Filler | Name | Granular silica | Granular silica | Glass fiber | Glass fiber |
| | wt % | 40 | 40 | 30 | 30 |
| Metallic Material | | KFC | KFC | KFC | KFC |
| Oxygen-Contg. Hydrocarbon Resin | Name | Mighty Ace G150 | Mighty Ace G150 | Mighty Ace G150 | Mighty Ace G150 |
| | wt part | 5 | 5 | 5 | 5 |
| Triazinethiol | | --- | --- | TTN | TTN |
| Adhesive Effect Enhancing Agent | Name | PC | --- | PC | --- |
| | wt part | 5 | --- | 5 | --- |
| Cooling Temp. of Metal Mold (°C) | | 50 | 150 | 50 | 150 |
| Evaluation of Adhesion | | 2/5 | 2/5 | 3/5 | 3/5 |

### 〈Test Example 401-415〉

Thermotropic liquid-crystal resin was used as a thermoplastic resin. In Tables 13-15 are shown the effect of addition of hydroxyl group-modified polyolefin wax of Polytale H (trade name, made by Mitsubishi Chemical Corp.), the treatment effect of surface active agent of triazinethiols, and the effect of adhesive effect enhancing agent.

**Table 13**

| | | Test Example | | | | | |
|---|---|---|---|---|---|---|---|
| | | 401 | 402 | 403 | 404 | 405 | 406 |
| Thermoplastic Resin | | LCP | LCP | LCP | LCP | LCP | LCP |
| Filler | Name | Glass fiber | Talc | Granular silica | Glass fiber | Talc | Granular silica |
| | wt % | 30 | 30 | 40 | 30 | 30 | 40 |
| Metallic Material | | Phosphor bronze | Phosphor bronze | Phosphor bronze | Phosphor bronze | Phosphor bronze | Phosphor bronze |
| Oxygen-Contg. Hydro-carbon Resin | Name | --- | --- | --- | Polytale H | Polytale H | Polytale H |
| | wt part | --- | --- | --- | 20 | 20 | 20 |
| Triazinethiol | | --- | --- | --- | --- | --- | --- |
| Adhesive Effect Enhancing Agent | Name | --- | --- | --- | --- | --- | --- |
| | wt part | --- | --- | --- | --- | --- | --- |
| Evaluation of Adhesion | | 0/5 | 0/5 | 0/5 | 1/5 | 1/5 | 2/5 |

**Table 14**

| | | Test Example | | | | | |
|---|---|---|---|---|---|---|---|
| | | 407 | 408 | 409 | 410 | 411 | 412 |
| Thermoplastic Resin | | LCP | LCP | LCP | LCP | LCP | LCP |
| Filler | Name | Glass fiber | Talc | Granular silica | Glass fiber | Talc | Granular silica |
| | wt % | 30 | 30 | 40 | 30 | 30 | 40 |
| Metallic Material | | Phosphor bronze | Phosphor bronze | Phosphor bronze | Phosphor bronze | Phosphor bronze | Phosphor bronze |
| Oxygen-Contg. Hydrocarbon Resin | Name | Polytale H | Polytale H | Polytale H | Polytale H | Polytale H | Polytale H |
| | wt part | 15 | 15 | 15 | 15 | 15 | 15 |
| Triazinethiol | | --- | --- | --- | TTN | TTN | TTN |
| Adhesive Effect Enhancing Agent | Name | SEBS | SEBS | SEBS | --- | --- | --- |
| | wt part | 5 | 5 | 5 | --- | --- | --- |
| Evaluation of Adhesion | | 2/5 | 3/5 | 4/5 | 1/5 | 2/5 | 3/5 |

**Table 15**

| | | Test Example | | |
|---|---|---|---|---|
| | | 413 | 414 | 415 |
| Thermoplastic Resin | | LCP | LCP | LCP |
| Filler | Name | Glass fiber | Talc | Granular silica |
| | wt % | 30 | 30 | 40 |
| Metallic Material | | Phosphor bronze | Phosphor bronze | Phosphor bronze |
| Oxygen-Contg. Hydrocarbon Resin | Name | Polytale H | Polytale H | Polytale H |
| | wt part | 10 | 10 | 10 |
| Triazinethiol | | TTN | TTN | TTN |
| Adhesive Effect Enhancing Agent | Name | MSE | MSE | MSE |
| | wt part | 5 | 5 | 5 |
| Evaluation of Adhesion | | 2/5 | 3/5 | 4/5 |

### 6. Examples on the Effect of Thermoplastic Elastomers

### 〈Test Examples 101-130〉

Compositions of resins and the results on the evaluation of adhesion are shown in the following Tables 16-21.

**Table 16**

| | | Test Example | | | | | |
|---|---|---|---|---|---|---|---|
| | | 101 | 102 | 103 | 104 | 105 | 106 |
| LCP (wt %) | | 70 | 70 | 70 | 70 | 70 | 70 |
| Filler | Name | Granular silica | Talc | Glass fiber | Granular silica | Talc | Glass fiber |
| | wt % | 30 | 30 | 30 | 30 | 30 | 30 |
| Metallic Material | | Copper | Copper | Copper | Copper | Copper | Copper |
| Triazinethiol | | --- | --- | --- | TTN | TTN | TTN |
| Thermoplastic Elastomer | | --- | --- | --- | --- | --- | --- |
| Oxygen-Contg. Hydrocarbon Resin | | --- | --- | --- | --- | --- | --- |
| Evaluation of Adhesion | | 0/5 | 0/5 | 0/5 | 0/5 | 0/5 | 0/5 |

**Table 17**

| | | Test Example | | |
|---|---|---|---|---|
| | | 107 | 108 | 109 |
| LCP (wt %) | | 70 | 70 | 70 |
| Filler | Name | Granular silica | Talc | Glass fiber |
| | wt % | 30 | 30 | 30 |
| Metallic Material | | Copper | Copper | Copper |
| Triazinethiol | | TEA | TEA | TEA |
| Thermoplastic Elastomer | | --- | --- | --- |
| Oxygen-Contg. Hydrocarbon Resin | | --- | --- | --- |
| Evaluation of Adhesion | | 0/5 | 0/5 | 0/5 |

**Table 18**

| | | Test Example | | | | | |
|---|---|---|---|---|---|---|---|
| | | 110 | 111 | 112 | 113 | 114 | 115 |
| LCP (wt %) | | 70 | 70 | 70 | 70 | 70 | 70 |
| Filler | Name | Granular silica | Talc | Glass fiber | Granular silica | Talc | Glass fiber |
| | wt % | 30 | 30 | 30 | 30 | 30 | 30 |
| Metallic Material | | Copper | Copper | Copper | Copper | Copper | Copper |
| Triazinethiol | | --- | --- | --- | TTN | TTN | TTN |
| Thermoplastic Elastomer | Name | SMA | SMA | SMA | SMA | SMA | SMA |
| | wt part⁽²⁾ | 3 | 3 | 3 | 3 | 3 | 3 |
| Oxygen-Containing Hydrocarbon Resin | | --- | --- | --- | --- | --- | --- |
| Evaluation of Adhesion | | 1/5 | 0/5 | 0/5 | 4/5 | 2/5 | 2/5 |

| | | | | | | | |
|---|---|---|---|---|---|---|---|
| Note: (1) Relative to 100 wt parts of LCP. | | | | | | | |

**Table 19**

| | | Test Example | | | | | |
|---|---|---|---|---|---|---|---|
| | | 116 | 117 | 118 | 119 | 120 | 121 |
| LCP (wt %) | | 70 | 70 | 70 | 70 | 70 | 70 |
| Filler | Name | Granular silica | Talc | Glass fiber | Granular silica | Talc | Glass fiber |
| | wt % | 30 | 30 | 30 | 30 | 30 | 30 |
| Metallic Material | | Copper | Copper | Copper | 42 Alloy | 42 Alloy | 42 Alloy |
| Triazinethiol | | TEA | TEA | TEA | --- | --- | --- |
| Thermoplastic Elastomer | Name | SMA | SMA | SMA | MSE | MSE | MSE |
| | wt part | 3 | 3 | 3 | 5 | 5 | 5 |
| Oxygen-Containing Hydrocarbon Resin | | --- | --- | --- | --- | --- | --- |
| Evaluation of Adhesion | | 4/5 | 2/5 | 2/5 | 2/5 | 0/5 | 0/5 |

**Table 20**

| | | Test Example | | | | | |
|---|---|---|---|---|---|---|---|
| | | 122 | 123 | 124 | 125 | 126 | 127 |
| LCP (wt %) | | 70 | 70 | 70 | 70 | 70 | 70 |
| Filler | Name | Granular silica | Talc | Glass fiber | Granular silica | Talc | Glass fiber |
| | wt % | 30 | 30 | 30 | 30 | 30 | 30 |
| Metallic Material | | 42 Alloy | 42 Alloy | 42 Alloy | 42 Alloy | 42 Alloy | 42 Alloy |
| Triazinethiol | | TTN | TTN | TTN | TEA | TEA | TEA |
| Thermoplastic Elastomer | Name | MSE | MSE | MSE | MSE | MSE | MSE |
| | wt part | 5 | 5 | 5 | 5 | 5 | 5 |
| Oxygen-Containing Hydrocarbon Resin | | --- | --- | --- | --- | --- | --- |
| Evaluation of Adhesion | | 5/5 | 3/5 | 3/5 | 5/5 | 4/5 | 3/5 |

**Table 21**

| | | Test Example | | |
|---|---|---|---|---|
| | | 128 | 129 | 130 |
| LCP (wt %) | | 70 | 70 | 70 |
| Filler | Name | Glass fiber | Glass fiber | Glass fiber |
| | wt % | 30 | 30 | 30 |
| Metallic Material | | 42 Alloy | 42 Alloy | 42 Alloy |
| Triazinethiol | | TEA | TEA | TEA |
| Thermoplastic Elastomer | Name | MSE | MSE | MSE |
| | wt part | 5 | 5 | 5 |
| Oxygen-Containing Hydrocarbon Resin | Name | Mighty Ace G150 | TM-60 | YP-90 |
| | wt part⁽²⁾ | 5 | 5 | 5 |
| Evaluation of Adhesion | | 5/5 | 5/5 | 5/5 |

| | | | | |
|---|---|---|---|---|
| Note: (2) Relative to 100 wt parts of LCP. | | | | |

### 7. Examples on the Effect of Polyamide Resin

### 〈Test Examples 101-139〉

Compositions of resins and the results on the evaluation of adhesion are shown in the following Tables 22-28.

**Table 22**

| | | Test Example | | | | | |
|---|---|---|---|---|---|---|---|
| | | 101 | 102 | 103 | 104 | 105 | 106 |
| LCP (wt %) | | 70 | 70 | 70 | 70 | 70 | 70 |
| Filler | Name | Granular silica | Talc | Glass fiber | Granular silica | Talc | Glass fiber |
| | wt % | 30 | 30 | 30 | 30 | 30 | 30 |
| Metallic Material | | Copper | Copper | Copper | Copper | Copper | Copper |
| Triazinethiol | | --- | --- | --- | TTN | TTN | TTN |
| Polyamide Resin | | --- | --- | --- | --- | --- | --- |
| Oxygen-Containing Hydrocarbon Resin | | --- | --- | --- | --- | --- | --- |
| Evaluation of Adhesion | | 0/5 | 0/5 | 0/5 | 0/5 | 0/5 | 0/5 |

**Table 23**

| | | Test Example | | |
|---|---|---|---|---|
| | | 107 | 108 | 109 |
| LCP (wt %) | | 70 | 70 | 70 |
| Filler | Name | Granular silica | Talc | Glass fiber |
| | wt % | 30 | 30 | 30 |
| Metallic Material | | Copper | Copper | Copper |
| Triazinethiol | | TEA | TEA | TEA |
| Polyamide Resin | | --- | --- | --- |
| Oxygen-Containing | | --- | --- | --- |
| Hydrocarbon Resin | | | | |
| Evaluation of Adhesion | | 0/5 | 0/5 | 0/5 |

**Table 24**

| | | Test Example | | | | | |
|---|---|---|---|---|---|---|---|
| | | 110 | 111 | 112 | 113 | 114 | 115 |
| LCP (wt %) | | 70 | 70 | 70 | 70 | 70 | 70 |
| Filler | Name | Granular silica | Talc | Glass fiber | Granular silica | Talc | Glass fiber |
| | wt % | 30 | 30 | 30 | 30 | 30 | 30 |
| Metallic Material | | Copper | Copper | Copper | Copper | Copper | Copper |
| Triazinethiol | | --- | --- | --- | TTN | TTN | TTN |
| Polyamide Resin | Name | PA6 | PA6 | PA6 | PA6 | PA6 | PA6 |
| | wt part⁽¹⁾ | 10 | 10 | 10 | 10 | 10 | 10 |
| Oxygen-Containing Hydrocarbon Resin | | --- | --- | --- | --- | --- | --- |
| Evaluation of Adhesion | | 0/5 | 0/5 | 0/5 | 4/5 | 2/5 | 2/5 |

| | | | | | | | |
|---|---|---|---|---|---|---|---|
| Note: (1) Relative to 100 wt parts of LCP. | | | | | | | |

**Table 25**

| | | Test Example | | | | | |
|---|---|---|---|---|---|---|---|
| | | 116 | 117 | 118 | 119 | 120 | 121 |
| LCP (wt %) | | 70 | 70 | 70 | 70 | 70 | 70 |
| Filler | Name | Granular silica | Talc | Glass fiber | Granular silica | Talc | Glass fiber |
| | wt % | 30 | 30 | 30 | 30 | 30 | 30 |
| Metallic Material | | Copper | Copper | Copper | 42 Alloy | 42 Alloy | 42 Alloy |
| Triazinethiol | | TEA | TEA | TEA | --- | --- | --- |
| Polyamide Resin | Name | PA6 | PA6 | PA6 | PA12 | PA12 | PA12 |
| | wt part | 10 | 10 | 10 | 10 | 10 | 10 |
| Oxygen-Containing Hydrocarbon Resin | | --- | --- | --- | --- | --- | --- |
| Evaluation of Adhesion | | 4/5 | 2/5 | 2/5 | 0/5 | 0/5 | 0/5 |

**Table 26**

| | | Test Example | | | | | |
|---|---|---|---|---|---|---|---|
| | | 122 | 123 | 124 | 125 | 126 | 127 |
| LCP (wt %) | | 70 | 70 | 70 | 70 | 70 | 70 |
| Filler | Name | Granular silica | Talc | Glass fiber | Granular silica | Talc | Glass fiber |
| | wt % | 30 | 30 | 30 | 30 | 30 | 30 |
| Metallic Material | | 42 Alloy | 42 Alloy | 42 Alloy | 42 Alloy | 42 Alloy | 42 Alloy |
| Triazinethiol | | TTN | TTN | TTN | TEA | TEA | TEA |
| Polyamide Resin | Name | PA12 | PA12 | PA12 | PA12 | PA12 | PA12 |
| | wt part | 10 | 10 | 10 | 10 | 10 | 10 |
| Oxygen-Containing Hydrocarbon Resin | | --- | --- | --- | --- | --- | --- |
| Evaluation of Adhesion | | 5/5 | 3/5 | 3/5 | 5/5 | 4/5 | 3/5 |

**Table 27**

| | | Test Example | | | | | |
|---|---|---|---|---|---|---|---|
| | | 128 | 129 | 130 | 131 | 132 | 133 |
| LCP (wt %) | | 70 | 70 | 70 | 70 | 70 | 70 |
| Filler | Name | Glass fiber | Glass fiber | Glass fiber | Granular silica | Talc | Glass fiber |
| | wt % | 30 | 30 | 30 | 30 | 30 | 30 |
| Metallic Material | | 42 Alloy | 42 Alloy | 42 Alloy | 42 Alloy | 42 Alloy | 42 Alloy |
| Triazinethiol | | TEA | TEA | TEA | --- | --- | --- |
| Polyamide Resin | Name | PA12 | PA12 | PA12 | PAE | PAE | PAE |
| | wt part | 10 | 10 | 10 | 5 | 5 | 5 |
| Oxygen-Containing Hydrocarbon Resin | Name | Mighty AceG150 | TM-60 | YP-90 | --- | --- | --- |
| | wt part⁽²⁾ | 5 | 5 | 5 | --- | --- | --- |
| Evaluation of Adhesion | | 5/5 | 5/5 | 5/5 | 2/5 | 0/5 | 0/5 |

| | | | | | | | |
|---|---|---|---|---|---|---|---|
| Note: (2) Relative to 100 wt parts of LCP. | | | | | | | |

**Table 28**

| | | Test Example | | | | | |
|---|---|---|---|---|---|---|---|
| | | 134 | 135 | 136 | 137 | 138 | 139 |
| LCP (wt %) | | 70 | 70 | 70 | 70 | 70 | 70 |
| Filler | Name | Granular silica | Talc | Glass fiber | Granular silica | Talc | Glass fiber |
| | wt % | 30 | 30 | 30 | 30 | 30 | 30 |
| Metallic Material | | 42 Alloy | 42 Alloy | 42 Alloy | 42 Alloy | 42 Alloy | 42 Alloy |
| Triazinethiol | | TTN | TTN | TTN | TEA | TEA | TEA |
| Polyamide Resin | Name | PAE | PAE | PAE | PAE | PAE | PAE |
| | wt part | 5 | 5 | 5 | 5 | 5 | 5 |
| Oxygen-Containing Hydrocarbon Resin | | --- | --- | --- | --- | --- | --- |
| Evaluation of Adhesion | | 5/5 | 3/5 | 3/5 | 5/5 | 4/5 | 3/5 |

### 8. Examples on the Effect of Non-Liquid-Crystal Polyester Resin

### 〈Test Examples 101-142〉

Shown in Tables 29-36 are the used thermotropic liquid-crystal resins, fillers, metallic materials, thermoplastic polyester elastomers, triazinethiol compounds and oxygen-containing hydrocarbon resins, and the results of evaluation of adhesion.

**Table 29**

| | | Test Example | | | | | |
|---|---|---|---|---|---|---|---|
| | | 101 | 102 | 103 | 104 | 105 | 106 |
| LCP (wt %) | | 70 | 70 | 70 | 70 | 70 | 70 |
| Filler | Name | Granular silica | Talc | Glass fiber | Granular silica | Talc | Glass fiber |
| | wt % | 30 | 30 | 30 | 30 | 30 | 30 |
| Metallic Material | | Copper | Copper | Copper | Copper | Copper | Copper |
| Triazinethiol | | --- | --- | --- | TTN | TTN | TTN |
| Polyester Elastomer | | --- | --- | --- | --- | --- | --- |
| Oxygen-Containing Hydrocarbon Resin | | --- | --- | --- | --- | --- | --- |
| Evaluation of Adhesion | | 0/5 | 0/5 | 0/5 | 0/5 | 0/5 | 0/5 |

**Table 30**

| | | Test Example | | |
|---|---|---|---|---|
| | | 107 | 108 | 109 |
| LCP (wt %) | | 70 | 70 | 70 |
| Filler | Name | Granular silica | Talc | Glass fiber |
| | wt % | 30 | 30 | 30 |
| Metallic Material | | Copper | Copper | Copper |
| Triazinethiol | | TEA | TEA | TEA |
| Polyester Elastomer | | --- | --- | --- |
| Oxygen-Containing Hydrocarbon Resin | | --- | --- | --- |
| Evaluation of Adhesion | | 0/5 | 0/5 | 0/5 |

**Table 31**

| | | Test Example | | | | | |
|---|---|---|---|---|---|---|---|
| | | 110 | 111 | 112 | 113 | 114 | 115 |
| LCP (wt %) | | 70 | 70 | 70 | 70 | 70 | 70 |
| Filler | Name | Granular silica | Talc | Glass fiber | Granular silica | Talc | Glass fiber |
| | wt % | 30 | 30 | 30 | 30 | 30 | 30 |
| Metallic Material | | Copper | Copper | Copper | Copper | Copper | Copper |
| Triazinethiol | | --- | --- | --- | TTN | TTN | TTN |
| Polyester Elastomer | Name | PBT | PBT | PBT | PBT | PBT | PBT |
| | wt part⁽¹⁾ | 10 | 10 | 10 | 10 | 10 | 10 |
| Oxygen-Containing Hydrocarbon Resin | | --- | --- | --- | --- | --- | --- |
| Evaluation of Adhesion | | 0/5 | 0/5 | 0/5 | 2/5 | 0/5 | 0/5 |

| | | | | | | | |
|---|---|---|---|---|---|---|---|
| Note: (1) Relative to 100 wt parts of LCP. | | | | | | | |

**Table 32**

| | | Test Example | | | | | |
|---|---|---|---|---|---|---|---|
| | | 116 | 117 | 118 | 119 | 120 | 121 |
| LCP (wt %) | | 70 | 70 | 70 | 70 | 70 | 70 |
| Filler | Name | Granular silica | Talc | Glass fiber | Granular silica | Talc | Glass fiber |
| | wt % | 30 | 30 | 30 | 30 | 30 | 30 |
| Metallic Material | | Copper | Copper | Copper | KFC | KFC | KFC |
| Triazinethiol | | TEA | TEA | TEA | --- | --- | --- |
| Polyester Elastomer | Name | PBT | PBT | PBT | PETE-2 | PETE-2 | PETE-2 |
| | wt part | 10 | 10 | 10 | 10 | 10 | 10 |
| Oxygen-Containing Hydrocarbon Resin | | --- | --- | --- | --- | --- | --- |
| Evaluation of Adhesion | | 2/5 | 0/5 | 0/5 | 0/5 | 0/5 | 0/5 |

**Table 33**

| | | Test Example | | | | | |
|---|---|---|---|---|---|---|---|
| | | 122 | 123 | 124 | 125 | 126 | 127 |
| LCP (wt %) | | 70 | 70 | 70 | 70 | 70 | 70 |
| Filler | Name | Granular silica | Talc | Glass fiber | Granular silica | Talc | Glass fiber |
| | wt % | 30 | 30 | 30 | 30 | 30 | 30 |
| Metallic Material | | KFC | KFC | KFC | KFC | KFC | KFC |
| Triazinethiol | | TTN | TTN | TTN | TEA | TEA | TEA |
| Polyester Elastomer | Name | PETE-2 | PETE-2 | PETE-2 | PETE-2 | PETE-2 | PETE-2 |
| | wt part | 10 | 10 | 10 | 10 | 10 | 10 |
| Oxygen-Containing Hydrocarbon Resin | | --- | --- | --- | --- | --- | --- |
| Evaluation of Adhesion | | 3/5 | 1/5 | 1/5 | 3/5 | 1/5 | 1/5 |

**Table 34**

| | | Test Example | | | | | |
|---|---|---|---|---|---|---|---|
| | | 128 | 129 | 130 | 131 | 132 | 133 |
| LCP (wt %) | | 70 | 70 | 70 | 70 | 70 | 70 |
| Filler | Name | Glass fiber | Glass fiber | Glass fiber | Granular silica | Talc | Glass fiber |
| | wt % | 30 | 30 | 30 | 30 | 30 | 30 |
| Metallic Material | | KFC | KFC | KFC | KFC | KFC | KFC |
| Triazinethiol | | TEA | TEA | TEA | --- | --- | --- |
| Polyester Elastomer | Name | PETE-2 | PETE-2 | PETE-2 | PETE-1 | PETE-1 | PETE-1 |
| | wt part | 10 | 10 | 10 | 5 | 5 | 5 |
| Oxygen-Containing Hydrocarbon Resin | Name | Mighty AceG150 | TM-60 | YP-90 | --- | --- | --- |
| | wt part⁽²⁾ | 5 | 5 | 5 | --- | --- | --- |
| Evaluation of Adhesion | | 5/5 | 3/5 | 3/5 | 1/5 | 0/5 | 0/5 |

| | | | | | | | |
|---|---|---|---|---|---|---|---|
| Note: (2) Relative to 100 wt parts of LCP. | | | | | | | |

**Table 35**

| | | Test Example | | | | | |
|---|---|---|---|---|---|---|---|
| | | 134 | 135 | 136 | 137 | 138 | 139 |
| LCP (wt %) | | 70 | 70 | 70 | 70 | 70 | 70 |
| Filler | Name | Granular silica | Talc | Glass fiber | Granular silica | Talc | Glass fiber |
| | wt % | 30 | 30 | 30 | 30 | 30 | 30 |
| Metallic Material | | KFC | KFC | KFC | KFC | KFC | KFC |
| Triazinethiol | | TTN | TTN | TTN | TEA | TEA | TEA |
| Polyester Elastomer | Name | PETE-1 | PETE-1 | PETE-1 | PETE-1 | PETE-1 | PETE-1 |
| | wt part | 5 | 5 | 5 | 5 | 5 | 5 |
| Oxygen-Containing Hydrocarbon Resin | | --- | --- | --- | --- | --- | --- |
| Evaluation of Adhesion | | 5/5 | 3/5 | 3/5 | 5/5 | 4/5 | 3/5 |

**Table 36**

| | | Test Example | | |
|---|---|---|---|---|
| | | 140 | 141 | 142 |
| LCP (wt %) | | 70 | 70 | 70 |
| Filler | Name | Glass fiber | Glass fiber | Glass fiber |
| | wt % | 30 | 30 | 30 |
| Metallic Material | | KFC | KFC | KFC |
| Triazinethiol | | TEA | TEA | TEA |
| Polyester Elastomer | Name | PETE-1 | PETE-1 | PETE-1 |
| | wt part | 5 | 5 | 5 |
| Oxygen-Containing Hydrocarbon Resin | Name | Mighty Ace G150 | TM-60 | YP-90 |
| | wt part | 2 | 2 | 2 |
| Evaluation of Adhesion | | 5/5 | 5/5 | 5/5 |

### 9. Examples on Amino LCP

### 〈Test Examples 101-121〉

Shown in Tables 37-40 are test results on the comparison of adhesive property between metallic materials treated with triazinethiol compounds and several LCP containing various fillers.

**Table 37**

| | | Test Example | | | | | |
|---|---|---|---|---|---|---|---|
| | | 101 | 102 | 103 | 104 | 105 | 106 |
| Kind of LCP | | LCP | LCP | LCP | LCP | LCP | LCP |
| Filler | Name | Granular silica | Talc | Glass fiber | Granular silica | Talc | Glass fiber |
| | wt %⁽¹⁾ | 30 | 30 | 30 | 30 | 30 | 30 |
| Metallic Material | | Copper | Copper | Copper | Copper | Copper | Copper |
| Triazinethiol | | --- | --- | --- | TTN | TTN | TTN |
| Evaluation of Adhesion | | 0/5 | 0/5 | 0/5 | 0/5 | 0/5 | 0/5 |

| | | | | | | | |
|---|---|---|---|---|---|---|---|
| Note: (1) Relative to 100 wt % of the whole resin composition containing several additives. | | | | | | | |

**Table 38**

| | | Test Example | | |
|---|---|---|---|---|
| | | 107 | 108 | 109 |
| Kind of LCP | | LCP | LCP | LCP |
| Filler | Name | Granular silica | Talc | Glass fiber |
| | wt % | 30 | 30 | 30 |
| Metallic Material | | Copper | Copper | Copper |
| Triazinethiol | | TEA | TEA | TEA |
| Evaluation of Adhesion | | 0/5 | 0/5 | 0/5 |

**Table 39**

| | | Test Example | | | | | |
|---|---|---|---|---|---|---|---|
| | | 110 | 111 | 112 | 113 | 114 | 115 |
| Kind of LCP | | LCP-1 | LCP-1 | LCP-1 | LCP-1 | LCP-1 | LCP-1 |
| Filler | Name | Granular silica | Talc | Glass fiber | Granular silica | Talc | Glass fiber |
| | wt % | 30 | 30 | 30 | 30 | 30 | 30 |
| Metallic Material | | Copper | Copper | Copper | Copper | Copper | Copper |
| Triazinethiol | | TTN | TTN | TTN | TEA | TEA | TEA |
| Evaluation of Adhesion | | 3/5 | 2/5 | 1/5 | 4/5 | 2/5 | 2/5 |

**Table 40**

| | | Test Example | | | | | |
|---|---|---|---|---|---|---|---|
| | | 116 | 117 | 118 | 119 | 120 | 121 |
| Kind of LCP | | LCP-2 | LCP-2 | LCP-2 | LCP-2 | LCP-2 | LCP-2 |
| Filler | Name | Granular silica | Talc | Glass fiber | Granular silica | Talc | Glass fiber |
| | wt % | 30 | 30 | 30 | 30 | 30 | 30 |
| Metallic Material | | Copper | Copper | Copper | Copper | Copper | Copper |
| Triazinethiol | | TTN | TTN | TTN | TEA | TEA | TEA |
| Evaluation of Adhesion | | 4/5 | 2/5 | 2/5 | 5/5 | 3/5 | 3/5 |

### 〈Test Examples 201-218〉

Several operations were applied to the adhesive composites producing the effect of the present invention, in order to improve their effect.

**Table 41**

| | | Test Example | | | | | |
|---|---|---|---|---|---|---|---|
| | | 201 | 202 | 203 | 204 | 2005 | 206 |
| Kind of LCP | | LCP-1 | LCP-1 | LCP-1 | LCP-1 | LCP-1 | LCP-1 |
| Filler | Name | Granular silica | Talc | Glass fiber | Granular silica | Talc | Glass fiber |
| | wt % | 30 | 30 | 30 | 30 | 30 | 30 |
| Metallic Material | | KFC | KFC | KFC | KFC | KFC | KFC |
| Triazinethiol | | TTN | TTN | TTN | TTN | TTN | TTN |
| Evaluation of Adhesion | | 3/5 | 2/6 | 1/5 | 4/5 | 2/5 | 2/5 |

**Table 42**

| | | Test Example | | | | | |
|---|---|---|---|---|---|---|---|
| | | 207 | 208 | 209 | 210 | 211 | 212 |
| Kind of LCP | | LCP-1 | LCP-1 | LCP-1 | LCP-1 | LCP-1 | LCP-1 |
| Filler | Name | Granular silica | Talc | Glass fiber | Granular silica | Talc | Glass fiber |
| | wt % | 30 | 30 | 30 | 30 | 30 | 30 |
| Metallic Material | | KFC | KFC | KFC | KFC | KFC | KFC |
| Triazinethiol | | TTN | TTN | TTN | TTN | TTN | TTN |
| Adhesive Effect Enhancing Agent | Name | Mighty Ace G150 | TM-60 | YP-90 | PAE | SEBS | PETE-2 |
| | wt part⁽²⁾ | 5 | 5 | 5 | 5 | 5 | 5 |
| Evaluation of Adhesion | | 5/5 | 3/5 | 3/5 | 5/5 | 3/5 | 3/5 |

| | | | | | | | |
|---|---|---|---|---|---|---|---|
| Note: (2) Relative to 100 wt parts of LCP. | | | | | | | |

**Table 43**

| | | Test Example | | | | | |
|---|---|---|---|---|---|---|---|
| | | 213 | 214 | 215 | 216 | 217 | 218 |
| Kind of LCP | | LCP-2 | LCP-2 | LCP-2 | LCP-2 | LCP-2 | LCP-2 |
| Filler | Name | Granular silica | Talc | Glass fiber | Granular silica | Talc | Glass fiber |
| | wt % | 30 | 30 | 30 | 30 | 30 | 30 |
| Metallic Material | | KFC | KFC | KFC | KFC | KFC | KFC |
| Triazinethiol | | TTN | TTN | TTN | TTN | TTN | TTN |
| Adhesive Effect Enhancing Agent | Name | Mighty Ace G150 | TM-60 | YP-90 | PAE | SEBS | PETE-2 |
| | wt part⁽²⁾ | 5 | 5 | 5 | 5 | 5 | 5 |
| Evaluation of Adhesion | | 5/5 | 4/5 | 4/5 | 5/5 | 4/5 | 4/5 |

| | | | | | | | |
|---|---|---|---|---|---|---|---|
| Note: (2) Relative to 100 wt parts of LCP. | | | | | | | |

### 10. Examples on LCP Containing Terpene Resins

The temperature of kneading section of a biaxial extruder was set to 350°C and the materials indicated in Tables 44 and 45 were mixed by melting them and pellets were produced by extrusion. Using these pellets, minimum filling pressures were measured in injection molding of the test piece as shown in Fig. 1. The results are also shown in Tables 44 and 45.

**Table 44**

| | | Comp. Example | Example | | | | | |
|---|---|---|---|---|---|---|---|---|
| | | 1 | 1 | 2 | 3 | 4 | 5 | 6 |
| LCP (wt part) | | 100 | 100 | 100 | 100 | 100 | 100 | 100 |
| Filler | Name | Glass fiber | Glass fiber | Glass fiber | Glass fiber | Glass fiber | Glass fiber | Glass fiber |
| | Wt part | 30 | 30 | 30 | 30 | 30 | 30 | 30 |
| Terpene Resin | Name | --- | G150 | YP-90 | TM-60 | G150 | YP-90 | TM-60 |
| | Wt part | --- | 3 | 3 | 3 | 6 | 6 | 6 |
| Thickness of Molded Product (mm) | | 0.5 | 0.5 | 0.5 | 0.5 | 0.5 | 0.5 | 0.5 |
| Minimum Filling Pressure ⁽¹⁾ (%) | | 100 | 88 | 88 | 92 | 78 | 80 | 85 |

| | | | | | | | | |
|---|---|---|---|---|---|---|---|---|
| Note: (1) Relative to 100 wt parts of resin component. | | | | | | | | |

**Table 45**

| | | Comp. Example | Example | | Comp. Example | Example | | |
|---|---|---|---|---|---|---|---|---|
| | | 2 | 7 | 8 | 3 | 9 | 10 | 11 |
| LCP (wt part) | | 100 | 100 | 100 | 100 | 100 | 100 | 100 |
| Filler | Name | Granular silica | Granular silica | Granular silica | Glass fiber | Glass fiber | Glass fiber | Glass fiber |
| | Wt part | 50 | 50 | 50 | 50 | 50 | 50 | 50 |
| Terpene Resin | Name | --- | G150 | YP-90 | --- | G150 | YP-90 | TM-60 |
| | Wt part | --- | 3 | 3 | --- | 2 | 2 | 2 |
| Thickness of Molded Product (mm) | | 1.0 | 1.0 | 1.0 | 2.0 | 2.0 | 2.0 | 2.0 |
| Minimum Filling Pressure ⁽¹⁾ (%) | | 100 | 88 | 90 | 100 | 88 | 88 | 92 |

| | | | | | | | | |
|---|---|---|---|---|---|---|---|---|
| Note: (1) Relative to 100 wt parts of resin component. | | | | | | | | |

### 11. Examples on LCP Containing Thermoplastic Polyester Elastomer

The kneading section of a biaxial extruder was set to 350°C and materials shown in Table 46 were mixed by melting and pellets were produced by extrusion. Using these pellets, several test pieces for measurement were prepared by injection molding. Resin compositions and results of measurement are shown in Tables 46 to 50.

**Table 46**

| | | | | Comp. Example | Example | | | | |
|---|---|---|---|---|---|---|---|---|---|
| | | | | 1 | 1 | 2 | 3 | 4 | 5 |
| Resin component LCP (wt %) | | | | 100 | 95 | 90 | 80 | 90 | 80 |
| Resin component Polyester Elastomer | | Name | | --- | PETE-1 | PETE-1 | PETE-1 | PETE-2 | PETE-2 |
| | | wt part | | --- | 5 | 10 | 20 | 10 | 20 |
| Filler | Name | | | Glass fiber | Glass fiber | Glass fiber | Glass fiber | Glass fiber | Glass fiber |
| | wt part⁽¹⁾ | | | 30 | 30 | 30 | 30 | 30 | 30 |
| Strength (%) of Test Pieces Having No Weld Line | | | A | 100 | 100 | 100 | 100 | 100 | 100 |
| Relative Strength (%) of Test Pieces Having Weld Lines | | | A | 77 | 80 | 84 | 88 | 80 | 84 |
| | | | B | 83 | 87 | 90 | 95 | 87 | 90 |
| | | | C | 87 | 90 | 95 | 95 | 90 | 95 |
| Warp (mm) | | | A | -0.44 | -0.27 | -0.45 | -0.09 | -0.27 | -0.16 |
| | | | B | -0.44 | -0.26 | -0.17 | -0.09 | -0.26 | -0.17 |
| | | | C | 0.21 | 0.11 | 0.09 | 0.02 | 0.13 | 0.11 |
| | | | D | 0.21 | 0.13 | 0.08 | 0.02 | 0.13 | 0.08 |
| Anti-Fibrillation | | | | X | △ | ○ | ⓞ | △ | ○ |

| | | | | | | | | | |
|---|---|---|---|---|---|---|---|---|---|
| Note: (1) Relative to 100 wt parts of resin component. | | | | | | | | | |

**Table 47**

| | | | | Comp. Example | Example | | | | |
|---|---|---|---|---|---|---|---|---|---|
| | | | | 2 | 6 | 7 | 8 | 9 | 10 |
| Resin component LCP (wt %) | | | | 100 | 95 | 90 | 80 | 90 | 80 |
| Resin component Polyester Elastomer | | Name | | --- | PETE-1 | PETE-1 | PETE-1 | PETE-2 | PETE-2 |
| | | wt part | | --- | 5 | 10 | 20 | 10 | 20 |
| Filler | Name | | | Glass fiber | Glass fiber | Glass fiber | Glass fiber | Glass fiber | Glass fiber |
| | wt part | | | 40 | 40 | 40 | 40 | 40 | 40 |
| Strength (%) of Test Pieces Having No Weld Line | | | A | 100 | 100 | 100 | 100 | 100 | 100 |
| Relative Strength (%) of Test Pieces Having Weld Lines | | | A | 80 | 83 | 85 | 90 | 82 | 84 |
| | | | B | 85 | 90 | 92 | 92 | 87 | 90 |
| | | | C | 87 | 90 | 95 | 95 | 90 | 92 |
| Warp (mm) | | | A | -0.34 | -0.17 | -0.10 | -0.05 | -0.17 | -0.11 |
| | | | B | -0.34 | -0.19 | -0.11 | -0.04 | -0.19 | -0.12 |
| | | | C | 0.11 | 0.10 | 0.07 | 0.02 | 0.11 | 0.07 |
| | | | D | 0.15 | 0.13 | 0.05 | 0.02 | 0.13 | 0.07 |
| Anti-Fibrillation | | | | X | △ | ○ | ⓞ | △ | ○ |

**Table 48**

| | | | Comp. Example | Example | |
|---|---|---|---|---|---|
| | | | 3 | 11 | 12 |
| Resin component LCP (wt %) | | | 100 | 90 | 90 |
| Resin component Polyester Elastomer | Name | | --- | PETE-1 | PETE-2 |
| | wt part | | --- | 10 | 10 |
| Filler | Name | | --- | --- | --- |
| | wt part | | --- | --- | --- |
| Strength (%) of Test Pieces Having No Weld Line | | A | 100 | 100 | 100 |
| Relative Strength (%) of Test Pieces Having Weld Lines | | A | 68 | 80 | 75 |
| | | B | 75 | 85 | 80 |
| | | C | 75 | 85 | 80 |
| Warp (mm) | | A | -0.84 | -0.34 | -0.47 |
| | | B | -0.94 | -0.34 | -0.44 |
| | | C | 0.71 | 0.28 | 0.38 |
| | | D | 0.65 | 0.33 | 0.43 |
| Anti-Fibrillation | | | XX | ○ | △ |

**Table 49**

| | | | | | Comp. Example | Example | | | | |
|---|---|---|---|---|---|---|---|---|---|---|
| | | | | | 1 | 2 | 2A | 2B | 2C | 2D |
| Resin component LCP (wt %) | | | | | 100 | 90 | 90 | 90 | 90 | 90 |
| Resin component Polyester Elastomer | | | Name | | --- | PETE-1 | PETE-1 | PETE-1 | PETE-1 | PETE-1 |
| | | | wt part | | | | | | | |
| | | | | | --- | 10 | 10 | 10 | 10 | 10 |
| Filler | Name | | | | Glass fiber | Glass fiber | Glass fiber | Glass fiber | Glass fiber | Glass fiber |
| | wt part | | | | 30 | 30 | 30 | 30 | 30 | 30 |
| Terpene Resin | | Name | | | --- | --- | G150 | G150 | YP-90 | YP-90 |
| | | wt part | | | --- | --- | 3 | 6 | 3 | 6 |
| Strength (%) of Test Pieces Having No Weld Line | | | | A | 100 | 100 | 100 | 100 | 100 | 100 |
| Relative Strength (%) of Test Pieces Having Weld Lines | | | | A | 77 | 84 | 84 | 84 | 86 | 84 |
| | | | | B | 83 | 90 | 90 | 89 | 90 | 89 |
| | | | | C | 87 | 95 | 95 | 92 | 95 | 92 |
| Minimum Filling Pressure ⁽²⁾ (%) | | | | | 100 | 100 | 90 | 80 | 90 | 82 |

| | | | | | | | | | | |
|---|---|---|---|---|---|---|---|---|---|---|
| Note: (2) Relative to 100 wt parts of resin component. | | | | | | | | | | |

**Table 50**

| | | | | Comp. Example | Example | | |
|---|---|---|---|---|---|---|---|
| | | | | 3 | 11 | 11A | 11B |
| Resin component LCP (wt %) | | | | | | | |
| | | | | 100 | 90 | 90 | 90 |
| Resin component Polyester Elastomer | | Name | | --- | PETE-1 | PETE-1 | PETE-1 |
| | | wt part | | --- | 10 | 10 | 10 |
| Filler | Name | | | --- | --- | --- | --- |
| | wt part | | | --- | --- | --- | --- |
| Terpene Resin | Name | | | --- | --- | G150 | G150 |
| | wt part | | | --- | --- | 3 | 6 |
| Strength (%) of Test Pieces Having No Weld Line | | | A | 100 | 100 | 100 | 100 |
| Relative Strength (%) of Test Pieces Having Weld Lines | | | A | 68 | 80 | 83 | 80 |
| | | | B | 75 | 85 | 89 | 85 |
| | | | C | 75 | 85 | 83 | 88 |
| Minimum Filling Pressure (%) | | | | 100 | 98 | 91 | 88 |

### INDUSTRIAL APPLICABILITY

A bonded composite excellent in adhesiveness of metal/resin can be obtained by melt bonding a metallic material, preferably one having a surface treated with a triazinethiol compound, with a thermoplastic resin containing various agents for enhancing the effect of adhesion, preferably a thermotropic liquid-crystal resin. The effect is supposed to be caused by that oxygen-containing hydrocarbon, thermoplastic elastomers each containing structural units derived from an α,β-unsaturated carboxylic acid or its anhydride, polyamide resin, and non-liquid-crystal polyester resin used as agents for enhancing the effect adhesion, cause interactions such as hydrogen bond and chemical bond, with the surface of metallic material or triazinethiol compound on the surface of metallic material, and their molecules can move in a mixture also after thermoplastic resin solidifies.

Further, a thermotropic liquid-crystal resin containing constituent monomers such as aromatic hydroxylamines, aromatic diamines, and aromatic aminocarboxylic acids cause strong interactions with a metallic material or one having a surface treated with a triazinethiol compound as mentioned above, and form an excellent bonded composite, thus being useful as an embedding material.

Furthermore, the minimum charging pressure in charging a mold can be reduced, and problems such as weld strength, peeling surface by fibrillation and warp owing to anisotropy of shrinkage can be eliminated by incorporating a terpene resin or a polyester thermoplastic elastomer into the thermotropic liquid-crystal resin, and the range of application as an embedding material can be enlarged.

## Claims

1. A bonded composite formed by bonding a metallic material and a molten thermoplastic resin.

2. A bonded composite as claimed in Claim 1, wherein said metallic material has a surface which is treated with a triazinethiol compound.

3. A bonded composite as claimed in Claim 1, wherein said thermoplastic resin is a thermotropic liquid-crystal resin.

4. A bonded composite as claimed in Claim 3, wherein said thermotropic liquid-crystal resin contains at least one constituent monomer selected from the group consisting of aromatic hydroxylamines, aromatic diamines and aromatic aminocarboxylic acids.

5. A bonded composite claimed in Claim 1, wherein said bonded composite constitutes a part of embedded structure.

6. A bonded composite as claimed in Claim 1, wherein said thermoplastic resin contains an agent for enhancing the effect of adhesion.

7. A bonded composite as claimed in Claim 6, wherein said agent for enhancing the effect of adhesion is at least one resin selected from the group consisting of hydrocarbon resins, thermoplastic elastomers each containing structural units derived from an α,β-unsaturated carboxylic acid or its anhydride, polyamide resins, and non-liquid-crystal polyester resins.

8. A bonded composite as claimed in Claim 6, wherein said hydrocarbon resin as an agent for enhancing the effect of adhesion is an oxygen-containing hydrocarbon resin.

9. A bonded composite as claimed in Claim 8, wherein said oxygen-containing hydrocarbon resin is an oxygen-containing terpene resin or its hydrogenated product.

10. A bonded composite as claimed in Claim 9, wherein said oxygen-containing terpene resin is anyone selected from the group consisting of reaction products of a terpene monomer and phenols, reaction products of a terpene monomer and an α,β-unsaturated carboxylic acid or its anhydride, and polyphenol resins containing terpene skeletons which are reaction products of cyclic terpene compounds and phenols.

11. A bonded composite as claimed in Claim 7, wherein said thermoplastic elastomer each containing structural units derived from α,β -unsaturated carboxylic acid or its anhydride is the one obtained by modifying a hydrogenated product of styrene-butadiene block copolymer with maleic anhydride.

12. A bonded composite as claimed in Claim 7, wherein said polyamide resin as an agent for enhancing the effect of adhesion is a polyamide thermoplastic elastomer.

13. A bonded composite as claimed in Claim 7, wherein said non-liquid-crystal polyester resin as an agent for enhancing the effect of adhesion is a polyester thermoplastic elastomer.

14. A bonded composite as claimed in Claim 13, wherein 0.1-30 mol % of the structural units derived from dicarboxylic acids in the polyester portion of said polyester thermoplastic elastomer is the one derived from a dimer acid or a hydrogenated dimer acid.

15. A bonded composite as claimed in Claim 14, wherein structural units derived from diols in the polyester portion of said polyester thermoplastic elastomer are those derived from ethylene glycol, 1,4-butanediol or 1,4-cyclohexanediol.

16. A bonded composite as claimed in Claim 14, wherein structural units other than dimer acids or hydrogenated dimer acids in the structural units derived from dicarboxylic acids in said polyester portion are those derived from terephthalic acid.

17. A thermotropic liquid-crystal resin composition as claimed in Claim 14, wherein said hydrogenated dimer acid has a structure shown in the following formulae [V], [VI] and [VII]. 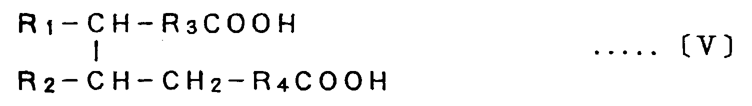 (In the formula, R₁ - R₄ are the same or different hydrocarbon groups d the sum of carbon atoms is 31.) 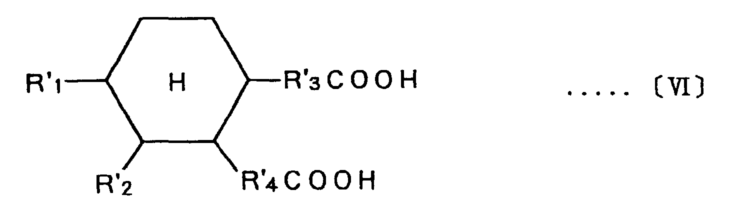 (In the formula, R'₁ - R'₄ are the same or different hydrocarbon groups and the sum of carbon atoms is 28.) 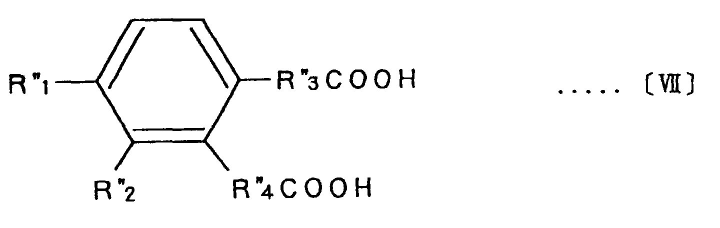 (In the formula, R''₁ - R''₄ are the same or different hydrocarbon groups and the sum of carbon atoms is 28.)

18. A thermotropic liquid-crystal resin composition containing 0.5-40% by weight of at least one resin selected from the group consisting of hydrocarbon reins, thermoplastic elastomers each containing structural units derived from an α,β-unsaturated carboxylic acid or its anhydride, polyamide thermoplastic elastomers, and polyester thermoplastic elastomers.

19. A thermotropic liquid-crystal resin composition claimed in Claim 18, wherein said hydrocarbon resin is a terpene resin.

20. A thermotropic liquid-crystal resin composition claimed in Claim 18, wherein 0.1-30 mol % of the structural units derived from dicarboxylic acids in the polyester portion of said polyester thermoplastic elastomer is the one derived from a dimer acid or a hydrogenated dimer acid.

21. A thermotropic liquid-crystal resin composition claimed in Claim 20, wherein the structural units derived from diol in the polyester portion of said polyester thermoplastic elastomer are those derived from ethylene glycol, 1,4-butanediol or 1,4-cyclohexanediol.

22. A thermotropic liquid-crystal resin composition claimed in Claim 20, wherein the structural units other than dimer acids or hydrogenated dimer acids in the structural units derived from dicarboxylic acids in said polyester portion are those derived from terephthalic acid.

23. A thermotropic liquid-crystal resin composition as claimed in Claim 14, wherein said hydrogenated dimer acid has a structure shown in the following formulae [V], [VI] and [VII]. 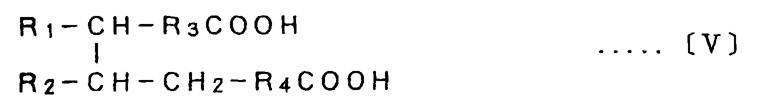 (In the formula, R₁ - R₄ are the same or different hydrocarbon groups and the sum of carbon atoms is 31.) 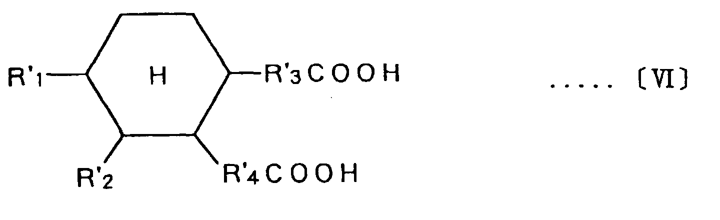 (In the formula, R'₁ - R'₄ are the same or different hydrocarbon groups and the sum of carbon atoms is 28.) 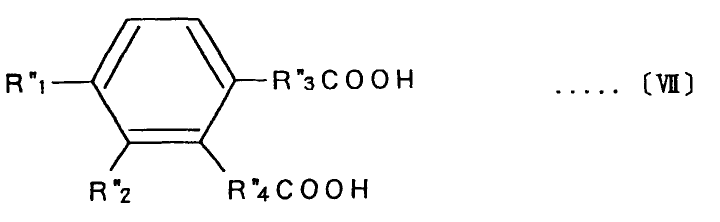 (In the formula, R''₁ - R''₄ are the same or different hydrocarbon groups and the sum of carbon atoms is 28.)

24. A thermotropic liquid-crystal resin composition claimed in Claim 18, wherein said thermotropic liquid-crystal resin composition is an embedding resin composition.
